(19) Europäisches Patentamt
European Patent Office
Office européen des brevets

(11) **EP 2 894 915 B1**

(12) **EUROPEAN PATENT SPECIFICATION**

(45) Date of publication and mention
of the grant of the patent:
**26.07.2017 Bulletin 2017/30**

(21) Application number: **12885350.4**

(22) Date of filing: **26.09.2012**

(51) Int Cl.:
***H04L 5/00*** *(2006.01)*          ***H04W 72/04*** *(2009.01)*

(86) International application number:
**PCT/CN2012/082100**

(87) International publication number:
**WO 2014/047821 (03.04.2014 Gazette 2014/14)**

(54) **CONTROL CHANNEL DETECTION METHOD AND USER EQUIPMENT**

VERFAHREN ZUR STEUERKANALERKENNUNG UND BENUTZERGERÄT

PROCÉDÉ DE DÉTECTION DE CANAL DE COMMANDE ET ÉQUIPEMENT UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2015 Bulletin 2015/29**

(73) Proprietor: **Huawei Technologies Co., Ltd.
Longgang District
Shenzhen, Guangdong 518129 (CN)**

(72) Inventors:
 • **LIU, Kunpeng
  Shenzhen
  Guangdong 518129 (CN)**
 • **LIU, Jianqin
  Shenzhen
  Guangdong 518129 (CN)**

 • **LIU, Jianghua
  Shenzhen
  Guangdong 518129 (CN)**

(74) Representative: **Kreuz, Georg Maria
  Huawei Technologies Duesseldorf GmbH
  Riesstrasse 8
  80992 München (DE)**

(56) References cited:
**EP-A2- 2 093 953          CN-A- 102 170 703
CN-A- 102 355 340          CN-A- 102 355 732
CN-A- 102 395 206          CN-A- 102 469 048**

 • **PATRICK HOSEIN: "Resource Allocation for the
LTE Physical Downlink Control Channel",
GLOBECOM WORKSHOPS, 2009 IEEE, IEEE,
PISCATAWAY, NJ, USA, 30 November 2009
(2009-11-30), pages 1-5, XP031585752, ISBN:
978-1-4244-5626-0**

EP 2 894 915 B1

## Description

### TECHNICAL FIELD

The present invention relates to the field of communications technologies, and in particular, to a control channel detection method and user equipment.

### BACKGROUND

In the prior art, a PDCCH (Physical Downlink Control Channel, physical downlink control channel) occupies the first few OFDM (Orthogonal Frequency Division Multiplexing, orthogonal frequency division multiplexing) symbols of a subframe, for example, occupies three OFDM symbols. With CRS (common reference signal, common reference signal) overhead removed from the three OFDM symbols, a resource formed by the remaining REs (Resource Element, resource element) corresponds to the entire search space of the PDCCH. The entire search space uses a CCE (control channel element, control channel element) as a minimum granularity, and a UE (User Equipment, user equipment) detects the control channel in the determined search space.

With massive deployment of heterogeneous networks, in the Rel-11, the PDCCH is challenged drastically in terms of capacity, coverage, and interference coordination. The design of an E-PDCCH (Enhanced PDCCH, enhanced physical downlink control channel) is studied and discussed in the 3GPP standard.

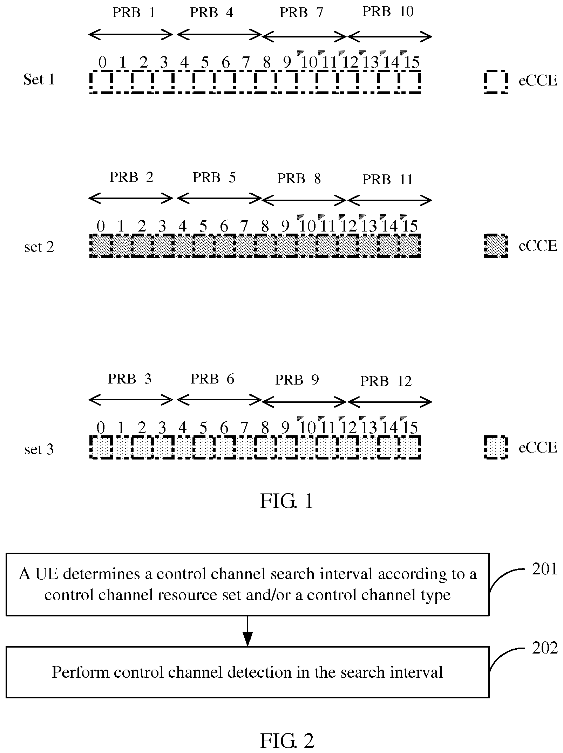

For the E-PDCCH, the network side may configure K control channel resource sets (set) for each UE, where K is a positive integer greater than or equal to 1, and each control channel resource set includes at least one physical resource block pair (PRB pair). For example, as shown in FIG. 1, the network side configures three control channel resource sets for the UE, and each control channel resource set includes four PRBs (physical resource block, physical resource block) pairs. For example, control channel resource set 1 includes PRB pairs 1, 4, 7, and 10; control channel resource set 2 includes PRB pairs 2, 5, 8, and 11; control channel resource set 3 includes PRB pairs 3, 6, 9, and 12; and each PRB pair includes four eCCEs (Enhanced-CCE, enhanced control channel element), and therefore, it can be seen that each control channel resource set includes sixteen eCCEs, and eCCEs in each control channel resource set are numbered independently.

However, the prior art does not provide a method for determining a search space of an E-PDCCH, and therefore, the UE cannot perform control channel detection.
IEEE document "Resource Allocation for the LTE Physical Downlink Control Channel" discloses how UEs are efficiently signalled over the PDCCH and a proposal of an algorithm for making PDCCH allocations within the subset of resources. CN patent application CN102355340A and EP patent application EP2744261A1 disclose a method for sending and receiving downlink control information. The method includes: discrete user-specific search space is determined, control channel resources corresponding to the discrete user-specific search spaces being distributed discretely; and the downlink control information on the discrete user-specific search space is sent. EP patent application EP2093953A2 discloses a method for efficiently transmitting and receiving control information through a PDCCH.

### SUMMARY

Embodiments of the present invention provide a control channel detection method and user equipment, so that the UE can perform control channel detection in an E-PDCCH search space.
A control channel detection method, a user equipment, a base station and a control channel transmission method are provided as claims.

In the embodiments of the present invention, the UE can determine an E-PDCCH search space according to the control channel resource set thereby implementing control channel detection of the UE. In this way, a solution is provided for the scenario in which multiple control channel resource sets are configured by a network side for the UE.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of multiple control channel resource sets configured by a network side for a UE;
FIG. 2 is a flowchart of a control channel detection method according to an embodiment of the present invention;

FIG. 3 is a flowchart of a method for determining a search space according to an embodiment of the present invention;

FIG. 4a is a schematic diagram of different control channel resource sets applied to different subframes in the embodiment shown in FIG. 3;

FIG. 4b is a schematic diagram of different transmission manners of control channel resource sets configured by a higher layer in the embodiment shown in FIG. 3;

FIG. 4c is a schematic diagram of control channel candidates of control channel resource sets configured by a higher layer in the embodiment shown in FIG. 3;

FIG. 5 is a schematic diagram of a first mapping relationship between a second carrier and control channel resource sets on a first carrier in the embodiment shown in FIG. 3;

FIG. 6 is a schematic diagram of a second mapping relationship between the second carrier and the control channel resource sets on the first carrier in the embodiment shown in FIG. 3;

FIG. 7 is a flowchart of a first embodiment of a method for determining a search start point of control channels according to the present invention;

FIG. 8 is a flowchart of a second embodiment of a method for determining a search start point of control channels according to the present invention;

FIG. 9 is a schematic diagram of determining a search start point of control channels in the embodiment shown in FIG. 8;

FIG. 10 is another schematic diagram of determining a search start point of control channels;

FIG. 11 is a flowchart of a third embodiment of a method for determining a search start point of control channels according to the present invention;

FIG. 12 is a schematic diagram showing how multiple UEs determine a search space in different control channel resource sets by using the same method;

FIG. 13 is a flowchart of a control channel transmission method according to an embodiment of the present invention;

FIG. 14 is a schematic structural diagram of a first embodiment of a user equipment according to the present invention;

FIG. 15 is a schematic structural diagram of a determining unit according to an embodiment of the present invention;

FIG. 16 is a schematic structural diagram of a first embodiment of a start point determining subunit according to the present invention;

FIG. 17 is a schematic structural diagram of a second embodiment of a start point determining subunit according to the present invention;

FIG. 18 is a schematic structural diagram of a third embodiment of a start point determining subunit according to the present invention;

FIG. 19 is a schematic structural diagram of a second embodiment of a user equipment according to the present invention;

FIG. 20 is a schematic structural diagram of a first embodiment of a base station according to the present invention;

FIG. 21 is a schematic structural diagram of a determining module according to an embodiment of the present invention;

FIG. 22 is a schematic structural diagram of a first embodiment of a start point determining submodule according to the present invention;

FIG. 23 is a schematic structural diagram of a second embodiment of a start point determining submodule according to the present invention;

FIG. 24 is a schematic structural diagram of a third embodiment of a start point determining submodule according to the present invention; and

FIG. 25 is a schematic structural diagram of a second embodiment of a base station according to the present invention.

## DESCRIPTION OF EMBODIMENTS

To enable a person skilled in the art to better understand the technical solutions in the embodiments of the present invention and make the above objectives, characteristics, and advantages of the present invention more comprehensible, the following further describes the technical solutions of the present invention in detail with reference to accompanying drawings.

FIG. 2 is a flowchart of a control channel detection method according to an embodiment of the present invention.

The method may include the following steps:

Step 201: A UE determines a control channel search space according to a control channel resource set and/or a control channel type.

The UE may determine the control channel search space according to the control channel resource set or the control channel type, or according to both the control channel resource set and the control channel type. The control channel resource set includes at least one physical resource block.

Step 202: Perform control channel detection in the search space.

In the embodiment of the present invention, the UE can determine an E-PDCCH search space by determining the control channel according to the control channel resource set and/or the control channel type, thereby implementing control channel detection of the UE. In this way, a solution is provided for the scenario in which multiple control channel resource sets are configured by a network side for the UE.

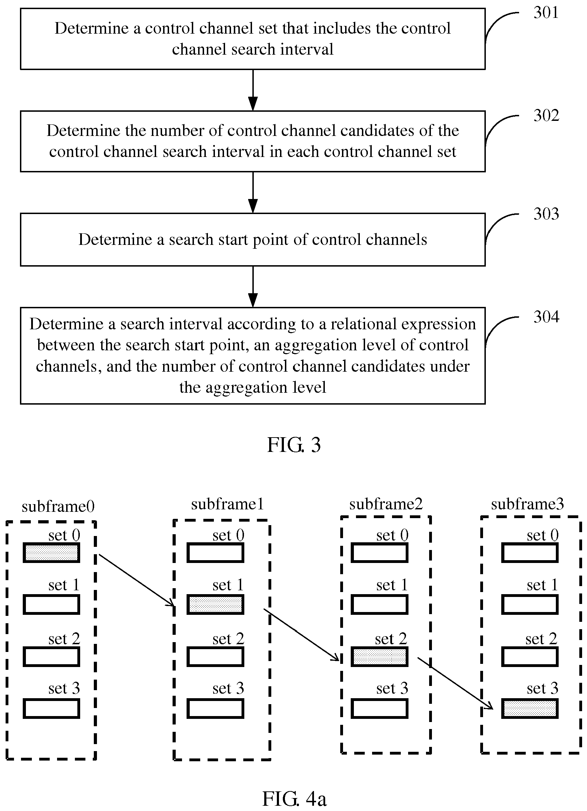

In the embodiment of the present invention, if the granularity of the control channel search space determined by the UE in step 201 is a search space within a control channel resource set, the steps shown in FIG. 3 are applicable to the process of determining the search space no matter whether the UE determines the control channel search space according to the control channel resource set or the control channel type, or according to both the control channel resource set and the control channel type.

FIG. 3 is a flowchart of a method for determining a search space according to an embodiment of the present invention.

The method for determining the search space may include the following steps:

Step 301: Determine a control channel set that includes the control channel search space.

In an embodiment of the present invention, the UE may determine the control channel resource set that includes the control channel search space according to a function relationship between the control channel resource set and the time. That is, the control channel resource set that includes the control channel search space varies with time. Different slots (slot) may employ different control channel resource sets, or different subframes employ different control channel resource sets. As shown in FIG. 4a, at subframe 0, the control channel resource set that includes the control channel search space is set 0; at subframe 1, the control channel resource set that includes the control channel search space is set 1; at subframe 2, the control channel resource set that includes the control channel search space is set 2; and, at subframe 3, the control channel resource set that includes the control channel search space is set 3.

The control channel resource set that includes the control channel search space of the UE may be a function of time, where the time may be a slot or a subframe or is predefined. Specifically, the control channel resource set that includes the control channel search space may be determined by using a carrier and/or an RNTI (radio network temporary identifier, radio network temporary identifier) and/or a subframe number. For example, in N control channel resource sets configured by a higher layer, it may be determined, according to the subframe number, that the control channel resource sets that include the control channel search space of a current subframe are M control channel resource sets among the control channel resource sets configured by the higher layer, where N is a positive integer greater than or equal to 1, M is a positive integer greater than or equal to 1 and less than or equal to N, and the M control channel resource sets in different subframes are the same or different.

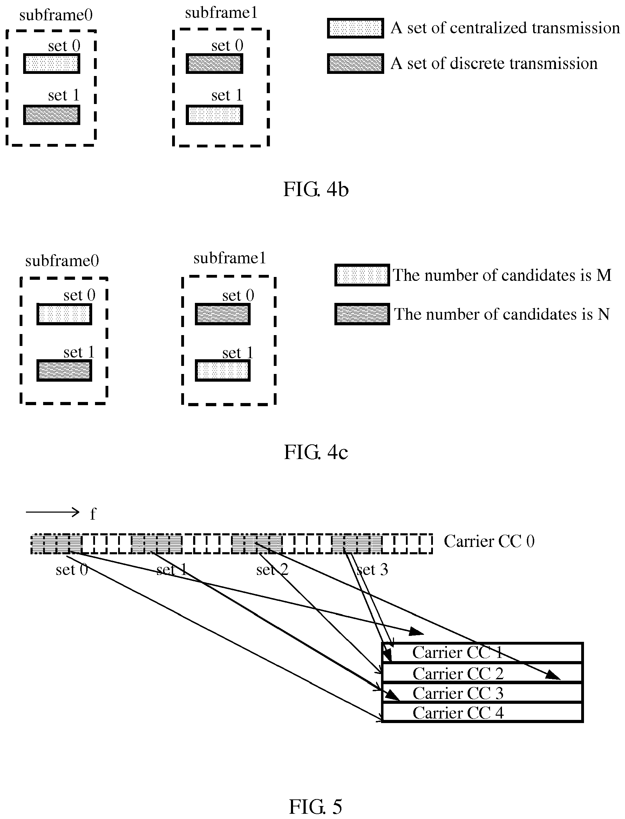

As shown in FIG. 4b, set 0 and set 1 are control channel resource sets configured by the higher layer. Within subframe 0, set 0 is a centralized transmission set and set 1 is a discrete transmission set, and therefore, in a next subframe, namely, subframe 1, set 0 is a discrete transmission set and set 1 is a centralized transmission set.

In another embodiment of the present invention, in a multi-carrier scenario, that is, when the UE has configured scheduling of data of multiple second carriers on a first carrier, the determining a control channel set that includes the control channel search space may also be: determining, according to a mapping relationship between the second carrier and the control channel resource set, a control channel resource set existing on the first carrier and corresponding to the control channel of the second carrier.

The mapping relationship between the second carrier and the control channel resource set may be as follows:

the control channel resource set of the second carrier is a function of an index number of the second carrier; or
a location of the control channel resource set on the first carrier is the same as a location of the control channel resource set on the second carrier.

That the control channel resource set of the second carrier is a function of the index number of the second carrier specifically may be: as shown in FIG. 5, P second carriers are scheduled on the first carrier CC 0, and, on the first carrier CC 0, the control channel resource set of the control channels of the P second carriers is a function of the index number of the P second carriers.

For example, four control channel resource sets, namely, set 0, set 1, set 2, and set 3, are configured on the first carrier CC 0. In practical transmission, PRB pairs in each control channel resource set may be discontinuous and discrete. For ease of illustration, the PRB pairs in each control channel resource set in FIG. 5 are continuous. Assuming that $n_{CI}$ is a sequence number index of each second carrier, the control channel resource set of the control channels of the P second carriers within the search space on the first carrier CC 0 is a function of $n_{CI}$. In FIG. 5, it is obtained, according to the function relationship, that, the sequence number index of the second carrier CC 1 corresponds to set 3 and set 0, the sequence number index of the second carrier CC 2 corresponds to set 2 and set 3, the sequence number index of the second carrier CC 3 corresponds to set 1 and set 2, and the sequence number index of the second carrier CC 4 corresponds to set 0 and set 1. Therefore, correspondingly, the control channel of the second carrier CC 1 are detected on set 3 and set 0 on the first carrier CC 0, the control channel of the second carrier CC 2 are detected on set 2 and set 3 on the first carrier CC 0, the control channel of the second carrier CC 3 are detected on set 1 and set 2 on the first carrier CC 0, and the control channel of the second carrier CC 4 are detected on set 0 and set 1 on the first carrier CC 0.

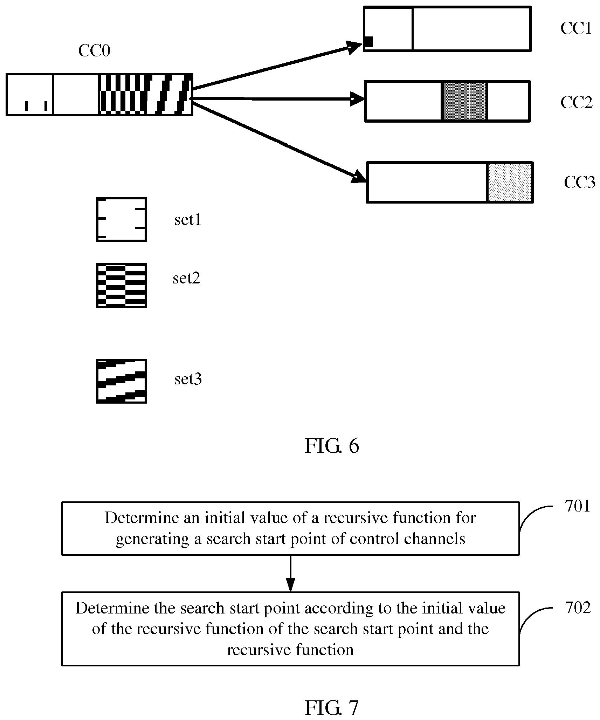

That the location of the control channel resource set on the first carrier is the same as the location of the control channel resource set on the second carrier specifically may be: as shown in FIG. 6, if set 1 is configured on the second carrier CC 1, set 2 is configured on the second carrier CC 2, and set 3 is configured on the second carrier CC 3, when the control channel of the second carrier CC 1 is detected on the first carrier CC 0, the detection is performed in the location existing on the first carrier CC 0 and corresponding to set 1 configured on the second carrier CC 1; when the control channel of the second carrier CC 2 is detected on the first carrier CC 0, the detection is performed in the location existing on the first carrier CC 0 and corresponding to set 2 configured on the second carrier CC 2; and, when the control channel of the second carrier CC 3 is detected on the first carrier CC 0, the detection is performed in the location existing on the first carrier CC 0 and corresponding to set 3 configured on the second carrier CC 3.

Step 302: Determine the number of control channel candidates of the control channel search space in each control channel set.

The determining the number of control channel candidates specifically may be: determining the number of control channel candidates of the control channel search space in each control channel set according to a carrier ID (carrier index or identifier) and/or a radio network temporary identifier and/or a subframe number.

For example, as shown in FIG. 4c, set 0 and set 1 are control channel resource sets configured by the higher layer. Within subframe 0, the number of control channel candidates configured in set 0 is M, and the number of control channel candidates configured in set 1 is N, and therefore, within a next subframe, namely, subframe 1, the number of control channel candidates configured in set 0 is N, and the number of control channel candidates configured in set 1 is M; or, within a next subframe, namely, subframe 1, the number of control channel candidates configured in set 0 is X, and the number of control channel candidates configured in set 1 is Y, where X is unequal to N, and Y is unequal to M.

Step 303: Determine a search start point of control channels.

In an embodiment, the process of determining the search start point of control channels may further include the steps shown in FIG. 7. FIG. 7 is a flowchart of a first embodiment of a method for determining a search start point of control channels according to the present invention.

Step 701: Determine an initial value of a recursive function for generating the search start point of control channels.

The initial value of the search start point may be an identifier that can identify the UE, for example, an RNTI allocated by a base station to the UE, denoted by $n_{RNTI}$. The initial value of the search start point is denoted by $Y_{-1}$, and therefore:

$$Y_{-1} = n_{RNTI} \, .$$

However, the initial value may also be another value and is not limited to $n_{RNTI}$.

Step 702: Determine the search start point according to the initial value of the recursive function of the search start point and the recursive function.

After the initial value of the search start point is obtained, the search start point of the UE in each control channel resource set may be determined according to the initial value and a recursive function, such as a HASH function.

For example, $Y_k = (A * Y_{k-1})$ mod $D$, where $Y_k$ is a search start point of the UE in the control channel resource set, and A and D are constants.

The process of determining the search start point of control channels may also be implemented in other manners.

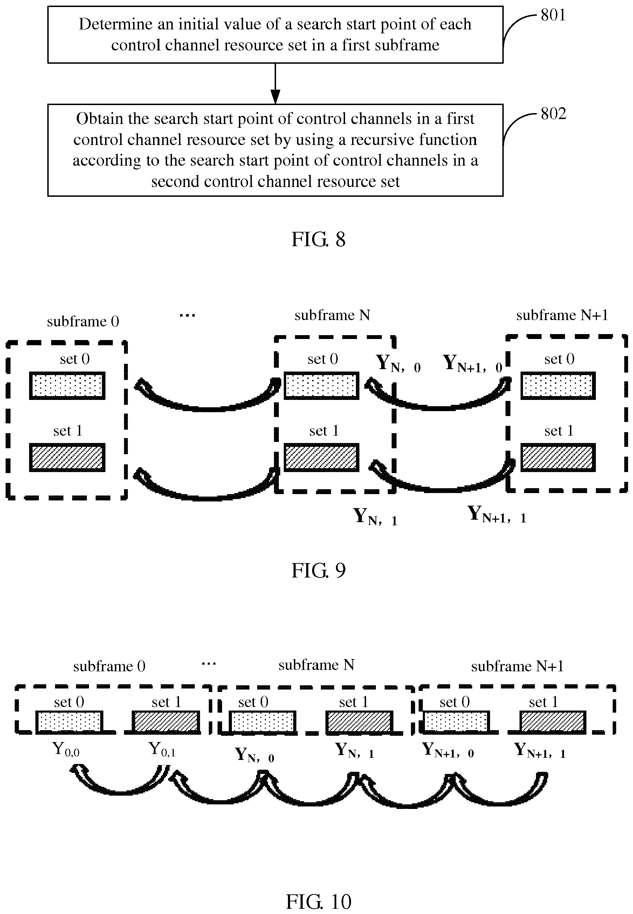

In another embodiment of the present invention, the process of determining a search start point of control channels may also be implemented according to the embodiment shown in FIG. 8.

FIG. 8 is a flowchart of a second embodiment of a method for determining a search start point of control channels according to the present invention.

The method may include the following steps:

Step 801: Determine an initial value of the search start point of each control channel resource set in a first subframe.

As shown in FIG. 9, first, an initial value of the search start point of each control channel resource set in the first subframe needs to be determined. For ease of description, the control channel resource sets in each subframe are numbered. For example, subframe 0 includes two control channel resource sets, so that the control channel resource sets are numbered as set 0 and set 1; and subframe 1 also includes two control channel resource sets, so that the control channel resource sets are also numbered as set 0 and set 1, and so on.

Therefore, in this step, the initial value of the search start point of set 0 and set 1 in subframe 0 needs to be determined first.

Step 802: Obtain the search start point of control channels in a first control channel resource set by using a recursive function according to the search start point of control channels in a second control channel resource set.

A subframe that includes the second control channel resource set is a subframe previous to the subframe that includes the first control channel resource set, and the first control channel resource set and the second control channel resource set are in the same location in their respective subframes.

In the schematic diagram shown in FIG. 9, subframe 0 is previous to subframe 1, and therefore, the search start point of control channels in set 0 in subframe 1 is obtained by using a recursive function according to the search start point of control channels in set 0 in subframe 0, and the search start point of control channels in set 1 in subframe 1 is obtained by using a recursive function according to the search start point of control channels in set 1 in subframe 0. Subframe 2 is previous to subframe 1, and therefore, the search start point of control channels in set 0 in subframe 2 is obtained by using a recursive function according to the search start point of control channels in set 0 in subframe 1, and the search start point of control channels in set 1 in subframe 2 is obtained by using a recursive function according to the search start point of control channels in set 1 in subframe 1, and so on.

In another embodiment, the initial value of the search start point of a specified control channel resource set in the first subframe may be determined first.

As shown in FIG. 10, first, an initial value of the search start point of the first control channel resource set in the first subframe needs to be determined. For ease of description, the control channel resource sets in each subframe are numbered. For example, subframe 0 includes two control channel resource sets, so that the control channel resource sets are numbered as set 0 and set 1; and subframe 1 also includes two control channel resource sets, so that the control channel resource sets are also numbered as set 0 and set 1, and so on.

Therefore, the initial value of the search start point of the first control channel resource set (set 0) in subframe 0 needs to be determined first.

Then, in the control channel resource sets of the subframe, the search start point in one part of control channel resource sets is obtained by using a recursive function according to the search start point in other control channel resource sets in the subframe that includes this part, and the search start point in the other part of control channel resource sets is obtained by using a recursive function according to the search start point in the control channel resource set(s) (one set or multiple sets) in a subframe previous to the subframe that includes the other part.

Specifically, the search start point of control channels in the third control channel resource set may be obtained by using a recursive function according to the search start point of control channels in the fourth second control channel resource set.

The third control channel resource set and the fourth control channel resource set are located in the same subframe, and, in the same subframe, the order of location of the fourth control channel resource set is previous and adjacent to that of the third control channel resource set; or, the fourth control channel resource set is in a subframe previous to the subframe that includes the third control channel resource set, the fourth control channel resource set is the last set in the subframe that includes the fourth control channel resource set, and the third control channel resource set is the first set in the subframe that includes the third control channel resource set.

As shown in FIG. 10, in the same subframe 0, the search start point of control channels in set 1 is obtained by using a recursive function according to the search start point of control channels in set 0; in the same subframe 1, the search start point of control channels in set 1 is obtained by using a recursive function according to the search start point of control channels in set 0, and so on; and, in adjacent subframes, the search start point of control channels in set 0 in subframe 1 is obtained by using a recursive function according to the search start point of control channels in set 1 in subframe 0, and the search start point of control channels in set 0 in subframe 2 is obtained by using a recursive function according to the search start point of control channels in set 1 in subframe 1.

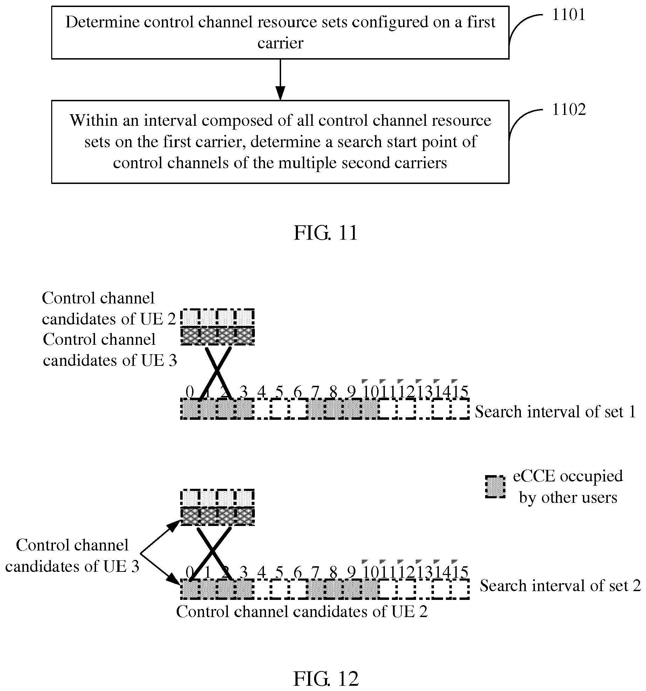

In another embodiment of the present invention, in a multi-carrier scenario, that is, when the UE has configured scheduling of multiple second carriers on a first carrier, the process of determining a search start point of control channels may also be implemented according to the embodiment shown in FIG. 11.

FIG. 11 is a flowchart of a third embodiment of a method for determining a search start point of control channels according to the present invention.

The method may include the following steps:

Step 1101: Determine control channel resource sets configured on a first carrier.

The UE schedules P second carriers on the first carrier CC 0, and control channel resource sets of the P second carriers are configured on the first carrier CC 0. Therefore, first, the UE determines all control channel resource sets on the first carrier CC 0.

Step 1102: Within a space formed by all control channel resource sets on the first carrier, determine a search start point of control channels of the multiple second carriers.

After all control channel resource sets on the first carrier CC0 are determined, the search start point of control channels of the multiple second carriers may be determined in the following manner.

The search space of control channels of the $n_{CI}$th carrier, which are transmitted in the $k^{th}$ subframe of carrier CC 0 and have an aggregation level L, is:

$$L\left\{(Y_{k,\,j}+m')\bmod\left\lfloor N_{\mathrm{CCE},k,\,j}/L\right\rfloor\right\}+i,$$

where

$$m'=m+M^{(L)}\cdot f(n_{CI}).$$

$$N_{\mathrm{CCE},k,j}=\sum_{j=0}^{K(n_{CI})-1}N_{CCE,k,j},\text{ and }^{K(n_{CI})}$$

is the number of control channel resource sets configured for control channels of the $n_{CI}$th carrier (one of the second carriers) when the control channels are transmitted on the first carrier CC 0, or is the total number of control channel sets configured on the first carrier CC 0, and $N_{CCE,k,j}$ is the number of (e)CCEs in the $j^{th}$ control channel resource set in the $k^{th}$ subframe.

The above expression refers to: within a space formed by all control channel resource sets on the first carrier, determining the location of a search start point of control channels of each second carrier. In addition, if it is configured that, on the first carrier CC 0, the search space of control channels of each second carrier is $P(n_{CI})$ control channel resource sets, and if the number of control channel candidates in each control channel resource set is configured, the start point of the search space of each second carrier on the first carrier is determined according to the number of eCCEs in all control channel resource sets of the first carrier or the number of (e)CCEs in all sets corresponding to only the second carrier, and according to $n_{RNTI}$. For example, the first carrier CC 0 has four control channel resource sets, namely, set 0, set 1, set 2, and set 3, each control channel resource set includes 16 eCCEs, and the control channels of the second carrier CC 1 are transmitted on the first carrier CC 0. Therefore, within a total of 64 eCCEs, the search start point under aggregation level 1 is determined as 18 according to the foregoing formula. In addition, it is configured that two control channel resource sets of the second carrier CC 1 are searched out on the first carrier CC 0, the number of control channel candidates in the first control channel resource set is 4, and the number of control channel candidates in the second control channel resource set is 2. Therefore, 18 corresponds to set 1, the search for the control channels of the second carrier CC 1 starts from set 1, blind detection is performed in set 1 for four times, and blind detection is performed in set 2 twice.

Step 304: Determine a search space according to a relationship between the search start point, an aggregation level of control channels, and the number of control channel candidates under the aggregation level, where the relationship may be a relational expression.

The aggregation level refers to a minimum granularity of control channels, where the minimum granularity may be an eCCE. The control channels may be transmitted on L eCCEs, where the value of L may be 1, 2, 4, 8, 16, or 32.

The determining a search space according to a relationship between the search start point, an aggregation level of control channels, and the number of control channel candidates under the aggregation level may specifically be:

determining a search space according to a relational expression between the search start point, an aggregation level of control channels, and the number of control channel candidates under the aggregation level.

The relational relationship for determining the search space may be:

The search space $S^L_k$ corresponding to the aggregation level L is:

$$S^L{}_k = L\{(Y_k + m')\}\bmod\lfloor N_{CCE,k} / L\rfloor + i$$

where $m' = m + M^L \cdot nCI$ and $m = 0, ...M^{(L)}-1$. $M^{(L)}$ is the number of control channel candidates under the aggregation level L, and $nCI$ is a parameter related to a multi-carrier aggregation carrier index. $N_{CCE,k}$ is the total number of eCCEs in the search space at the time point k, where $i = 0, ...L-1$.

In the foregoing embodiment, as regards how the UE determines the control channel search space according to the control channel resource set, each UE may determine the search space in each control channel resource set in the same manner. That is, in each control channel resource set, steps 301 to 304 are performed. In other words, in different control channel resource sets, the initial value of the recursive function for generating the search start point of the control channels may be the same; in different control channel resource sets, the recursive function for determining the search start point is the same; and, in different control channel resource sets, the relational expression for determining the search space is the same.

However, if multiple UEs determine the search space in different control channel resource sets by using the same method, conflict may occur. For example, as shown in FIG. 12, if the number of control channel candidates of UE 2 and UE 3 under a specific aggregation level, such as aggregation level 4, in set 1 is 1, and the number in set 2 is also 1, when UE 2 and UE 3 obtains the same search start point, such as eCCE 0 illustrated in FIG. 12, by using the foregoing search start point generation manner, because eCCE 0, eCCE 1, eCCE 2, and eCCE 3 are occupied by other users, the control channel candidates of UE 2 and UE 3 under aggregation level 4 are blocked and cannot be transmitted in set 1, and may still be transmitted in set 2. If UE 2 and UE 3 use the same search start point generation manner as that in set 1, for example, the search start point in set 2 is still eCCE 0, the control channel of either of the two UEs may be put onto eCCE 0, eCCE 1, eCCE 2, and eCCE 3 in set 2. For example, the control channel of UE 2 in FIG. 12 is put in set 2 for transmission. However, because UE 3 and UE 2 have the same search start point and there is only one control channel candidate, the control channel candidate can be put onto only eCCE 0, eCCE 1, eCCE 2, and eCCE 3 for transmission. Because they have been occupied by UE 2, the control channel of UE 3 still cannot be transmitted. Consequently, even if the search space of set 2 has idle resources, the resources are still unavailable to the control channel of UE 3.

Therefore, when the UE determines the control channel search space according to the control channel resource set, the manner of determining the search space in different control channel resource sets may differ. Specifically, the following manner may be applied:

1) In an embodiment of the present invention, in different control channel resource sets, the initial values of recursive functions for generating the search start point of control channels are different. Specifically, the initial value may include a first characteristic parameter, and a different control channel resource set corresponds to a different first characteristic parameter.

Specifically, the first characteristic parameter C(j) may be one of the following:

an index of a first PRB pair among PRB pairs in the control channel resource set; a parameter notified through dynamic signaling or higher-layer signaling; an index of each control channel resource set after all control channel resource sets are numbered; a parameter related to CSI-RS (channel state information-reference signal, channel state information-reference signal) configuration; and an offset value relative to a specified control channel resource set.

The initial value of the search start point Y of control channels in each control channel resource set (the total number of control channel resource sets is k(c)) may specifically be:

$$Y_{-1} = n_{\text{RNTI}} \neq 0$$

$$Y_{-1}, \quad j = n_{\text{RNTI}} + C\ (j)\ , \quad j = 0,1...K\ (c)-1;$$

or,

$$Y_{-1}, \quad j = n_{\text{RNTI}} * C\ (j)\ , \quad j = 0,1...K\ (c)-1.$$

If C(j) is an offset value offset (j) relative to a specified control channel resource set, assuming that the specified control channel resource set is a control channel resource set with j=0,

$$Y_{-1},0 = n_{\text{RNTI}}, \quad j = 0,$$

the search start point of other control channel resource sets is

$$Y_{-1}, \; j = n_{\text{RNTI}} + \text{offset}\,(j), \quad j = 1...K\,(c)\text{-}1$$

or

$$Y_{-1}, \; j = n_{\text{RNTI}} * \text{offset}\,(j), \quad j = 1...K\,(c)\text{-}1.$$

offset (j) is an offset value of the $j^{\text{th}}$ control channel resource set relative to the $0^{\text{th}}$ control channel resource set. Further, the offset value may be an index value of an index of a first PRB pair in all PRB pairs in each control channel resource set, relative to a first PRB pair in the $0^{\text{th}}$ control channel resource set; or may be a parameter notified through dynamic signaling or higher-layer signaling; or may be an offset value of an index of each control channel resource set relative to the index value of a specific control channel resource set after all control channel resource sets are numbered; or may be a parameter related to CSI-RS configuration.

In addition, if the control channel resource set further includes different control channel types, a different control channel type may also correspond to a different first characteristic parameter.

The different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI (Downlink control information, downlink control information); control channels of subframes of different cyclic prefixes; control channels of different special subframe types; control channels transmitted in PRB pairs with different numbers of available REs; control channels transmitted by control channel elements (e)CCEs (enhanced control channel element) that include different numbers of resource element groups (e)REG (enhanced resource element group); and control channels of different carriers.

For example, when each carrier of control channels is configured with K(c) control channel resource sets, the K(c) control channel resource sets include KD(c) control channel resource sets of discrete transmission, and KL(c) control channel resource sets of centralized transmission, and each control channel resource set includes at least one PRB pair. Therefore, in the control channel resource sets, the first characteristic parameter in the control channel resource set of centralized transmission is different from the first characteristic parameter in the control channel resource set of discrete transmission.

2) In another embodiment of the present invention, in different control channel resource sets, the recursive function for determining the search start point is different. Specifically, the recursive function may include a second characteristic parameter, and a different control channel resource set corresponds to a different second characteristic parameter.

Specifically, the second characteristic parameter may be one of the following:

an index of a first PRB pair among PRB pairs in the control channel resource set; a parameter notified through dynamic signaling or higher-layer signaling; an index of each control channel resource set after all control channel resource sets are numbered; a parameter related to CSI-RS configuration; and an offset value relative to a specified control channel resource set.

The recursive function for determining the search start point in the $j^{\text{th}}$ control channel resource set (the total number of control channel resource sets is k(c)) may specifically be:

$$Y_{k,\,j} = (AY_{k-1,j} + C'(j)\,)\ \mathrm{modD},\ \ j = 0,1\ldots K\,(c)\text{-}1,$$

or

$$Y_{k,\,j} = (A\,(Y_{k-1,j} + C'(j)\,)\,)\ \mathrm{modD},\ \ j = 0,1\ldots K\,(c)\text{-}1$$

or

$$Y_{k,\,j} = (AY_{k-1,j} * C'(j)\,)\ \mathrm{modD},\ \ j = 0,1\ldots K\,(c)\text{-}1$$

or

$$Y_{k,\,j} = (C'(j)\,Y_{k-1,j})\ \mathrm{modD},\ \ j = 0,1\ldots K\,(c)\text{-}1$$

where C'(j) is the second characteristic parameter.

If the C'(j) is an offset value offset'(j) relative to a specified control channel resource set, assuming that the specified control channel resource set is a control channel resource set with j=0, the recursive function for determining the search start point in the $j^{th}$ control channel resource set may be:

$$Y_{k,\,j} = (AY_{k-1,j} + \mathrm{offset}'(j)\,)\ \mathrm{modD},\ \ j = 0,1\ldots K\,(c)\text{-}1,$$

or

$$Y_{k,\,j} = (A\,(Y_{k-1,j} + \mathrm{offset}'(j)\,)\,)\ \mathrm{modD},\ \ j = 0,1\ldots K\,(c)\text{-}1$$

or

$$Y_{k,\,j} = (AY_{k-1,j} * \mathrm{offset}'(j)\,)\ \mathrm{modD},\ \ j = 0,1\ldots K\,(c)\text{-}1$$

where offset'(j) is an offset value of the $j^{th}$ control channel resource set relative to the $0^{th}$ control channel resource set. Further, the offset value may be an index value of an index of a first PRB pair in all PRB pairs in each control channel resource set, relative to a first PRB pair in the $0^{th}$ control channel resource set; or may be a parameter notified through dynamic signaling or higher-layer signaling; or may be an offset value of an index of each control channel resource set relative to the index value of a specific control channel resource set after all control channel resource sets are numbered; or may be a parameter related to CSI-RS configuration.

In addition, if the control channel resource set further includes different control channel types, a different control channel type may also correspond to a different second characteristic parameter.

The different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI; control channels of subframes of different cyclic prefixes; control channels of different special subframe types; control channels transmitted in physical resource pairs (PRB pairs) with different numbers of available resource elements (REs); control channels transmitted by control channel elements that include different numbers of resource element groups; and control channels of different carriers.

For example, when each carrier of control channels is configured with K(c) control channel resource sets, the K(c) control channel resource sets include KD(c) control channel resource sets of discrete transmission, and KL(c) control channel resource sets of centralized transmission, and each control channel resource set includes at least one PRB pair. Therefore, in the control channel resource sets, the second characteristic parameter in the control channel resource set of centralized transmission is different from the second characteristic parameter in the control channel resource set of discrete transmission.

3) In another embodiment of the present invention, in different control channel resource sets, the relational expression for determining the search space is different. Specifically, the relational expression for determining the search space may include a third characteristic parameter, and a different control channel resource set corresponds to a different third characteristic parameter.

Specifically, the third characteristic parameter may be one of the following:

> an index of a first PRB pair among PRB pairs in the control channel resource set; a parameter notified through dynamic signaling or higher-layer signaling; an index of each control channel resource set after all control channel resource sets are numbered; a parameter related to CSI-RS configuration; and an offset value relative to a specified control channel resource set.

The search space of the $j^{th}$ control channel resource set under the aggregation level L is

$$L\left\{(Y_{k,\ j}+m')\bmod\left\lfloor N_{\mathrm{CCE},k,\ j}/L\right\rfloor\right\}+i \quad,\quad m'=m+M_{\mathrm{j}}^{(L)}\cdot n_{CI}+\mathrm{C''(j)}$$

where C''(j) is the third characteristic parameter, $N_{\mathrm{CCE},k,\ j}$ is the number of eCCEs in the $j^{th}$ control channel resource set,

and $M_{\mathrm{j}}^{(L)}$ is the number of control channel candidates under the aggregation level L in the $j^{th}$ control channel resource set.

If C''(j) is an offset value offset''(j) relative to a specified control channel resource set, assuming that the selected control channel resource set is a control channel resource set with j=0, the relational expression for generating the search space may be:

$$L\left\{(Y_{k,\ j}+m')\bmod\left\lfloor N_{\mathrm{CCE},k}/L\right\rfloor\right\}+i \quad,\quad m'=m+M^{(L)}\cdot n_{CI}+\mathrm{offset''(j)}.$$

offset''(j) is an offset value of the $j^{th}$ control channel resource set relative to the $0^{th}$ control channel resource set. Further, the offset value may be an index value of an index of a first PRB pair in all PRB pairs in each control channel resource set, relative to a first PRB pair in the $0^{th}$ control channel resource set; or may be a parameter notified through dynamic signaling or higher-layer signaling; or may be an offset value of an index of each control channel resource set relative to the index value of a specific control channel resource set after all control channel resource sets are numbered; or may be a parameter related to CSI-RS configuration.

In addition, if the control channel resource set further includes different control channel types, a different control channel type may also correspond to a different third characteristic parameter.

The different control channel types are attributable to any one of the following groups:

> control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI; control channels of subframes of different cyclic prefixes; control channels of different special subframe types; control channels transmitted in physical resource pairs (PRB pairs) with different numbers of available resource elements (REs); control channels transmitted by control channel elements that include different numbers of resource element groups; and control channels of different carriers.

For example, when each carrier of control channels is configured with K(c) control channel resource sets, the K(c) control channel resource sets include KD(c) control channel resource sets of discrete transmission, and KL(c) control channel resource sets of centralized transmission, and each control channel resource set includes at least one PRB pair. Therefore, in the control channel resource sets, the third characteristic parameter in the control channel resource set of centralized transmission is different from the third characteristic parameter in the control channel resource set of discrete transmission.

To make the search space determining manner vary in different control channel resource sets, 1), 2) and 3) may be applied in the same embodiment. The foregoing embodiment can reduce the probability of control channel conflict between the UEs and improve transmission efficiency.

The above text has described the manner of determining the search space in different control channel resource sets when the UE determines the control channel search space according to the control channel resource set. When the UE determines the control channel search space according to the control channel type, the UE may determine the control channel search space in different control channel types in the same manner, that is, steps 301 to 304 are performed for all the different control channel types. However, to avoid conflict, in different control channel types, the UE may determine the control channel search space in different manners detailed below:

1) In an embodiment of the present invention, in different control channel types, the manner of determining a control channel set that includes the control channel search space is different.

The determining a control channel set that includes the control channel search space may specifically be:

in N control channel resource sets configured by a higher layer, determining, according to the subframe number, the control channel resource sets that respectively include the control channel search space of different control channel types of a current subframe, the control channel resource sets that respectively include the control channel search space of different control channel types in different subframes are the same or different.

As shown in FIG. 4b, set 0 and set 1 are control channel resource sets configured by the higher layer. Within subframe 0, set 0 is a centralized transmission set and set 1 is a discrete transmission set, and therefore, in a next subframe, namely, subframe 1, set 0 is a discrete transmission set and set 1 is a centralized transmission set.

2) In another embodiment of the present invention, in different control channel types, the manner of determining the number of control channel candidates in each control channel set that includes the control channel search space is different.

Specifically, the number of control channel candidates of the control channel search space in each control channel set may be determined according to a carrier ID and/or a radio network temporary identifier and/or a subframe number. For example, as shown in FIG. 4c, set 0 and set 1 are control channel resource sets configured by the higher layer. Within subframe 0, the number of control channel candidates configured in set 0 is M, and the number of control channel candidates configured in set 1 is N, and therefore, within a next subframe, namely, subframe 1, the number of control channel candidates configured in set 0 is N, and the number of control channel candidates configured in set 1 is M; or, within a next subframe, namely, subframe 1, the number of control channel candidates configured in set 0 is X, and the number of control channel candidates configured in set 1 is Y, where X is unequal to N, and Y is unequal to M.

3) In another embodiment of the present invention, in different control channel types, the initial values of recursive functions for generating the search start point of control channels are different. Specifically, the initial value may include a fourth characteristic parameter, and a different control channel type corresponds to a different fourth characteristic parameter.

The different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI; control channels of subframes of different cyclic prefixes; control channels of different special subframe types; control channels transmitted in physical resource pairs (PRB pairs) with different numbers of available resource elements (REs); control channels transmitted by control channel elements that include different numbers of resource element groups; and control channels of different carriers.

4) In another embodiment of the present invention, in different control channel types, the recursive function for determining the search start point is different. Specifically, the recursive function for determining the search start point may include a fifth characteristic parameter, and a different control channel type corresponds to a different fifth characteristic parameter.

The different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI; control channels of subframes of different cyclic prefixes; control channels of different special subframe types; control channels transmitted in physical resource pairs (PRB pairs) with different numbers of available resource elements (REs); control channels transmitted by control channel elements that include different numbers of resource element groups; and control channels of different carriers.

5) In another embodiment of the present invention, in different control channel types, the relational expression for determining the search space is different. Specifically, the relational expression for determining the search space may include a sixth characteristic parameter, and a different control channel type corresponds to a different sixth characteristic parameter.

The different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a UE-specific search space; control channels of uplink scheduling signaling and control channels of downlink scheduling signaling; control channels of centralized transmission and control channels of discrete transmission; control channels of different DCI; control channels of subframes of different cyclic prefixes; control channels of different special subframe types; control channels transmitted in PRB pairs with different numbers of available REs; control channels transmitted by control channel elements (e)CCE that include different numbers of resource element groups (e)REG; and control channels of different carriers.

To make the search space determining manner vary in different control channel types, 1) to 5) above may be applied in the same embodiment. The foregoing embodiment can reduce the probability of control channel conflict between the UEs and improve transmission efficiency.

The foregoing embodiment deals with a scenario in which the granularity of the control channel search space determined by the UE is a search space within a control channel resource set. In another embodiment of the present invention, when the control channel type is attributable to control channels of different carriers, the control channel search space determined by the UE is control channel resource sets, that is, the granularity of the control channel search space determined by the UE is control channel resource sets. In this case, the process of the UE determining the control channel search space according to the control channel type may specifically include:

when the UE has configured scheduling of multiple second carriers on a first carrier, determining a control channel resource set corresponding to the user equipment according to a mapping relationship between the second carrier and the control channel resource set.

The mapping relationship between the second carrier and the control channel resource set may be as follows:

the control channel resource set of the second carrier is a function of an index number of the second carrier; or a location of the control channel resource set on the first carrier is the same as a location of the control channel resource set on the second carrier.

The mapping relationship between the second carrier and the control channel resource set here is similar to the mapping relationship described in step 301 between the second carrier and the control channel resource set. That the control channel resource set of the second carrier is a function of the index number of the second carrier specifically may also be: as shown in FIG. 5, P second carriers are scheduled on the first carrier CC 0, and, on the first carrier CC 0, the control channel resource set of the control channels of the P second carriers is a function of the index number of the P second carriers.

For example, four control channel resource sets, namely, set 0, set 1, set 2, and set 3, are configured on the first carrier CC 0. In practical transmission, the PRB pairs in each control channel resource set may be discontinuous and discrete. For ease of illustration, the PRB pairs in each control channel resource set in FIG. 5 are continuous. Assuming that $n_{CI}$ is a sequence number index of each second carrier, the control channel resource set of the control channels of the P second carriers within the search space on the first carrier CC 0 is a function of $n_{CI}$. In FIG. 5, it is obtained, according to the function relationship, that, the sequence number index of the second carrier CC 1 corresponds to set 3 and set 0, the sequence number index of the second carrier CC 2 corresponds to set 2 and set 3, the sequence number index of the second carrier CC 3 corresponds to set 1 and set 2, and the sequence number index of the second carrier CC 4 corresponds to set 0 and set 1. Therefore, correspondingly, the control channels of the second carrier CC 1 are detected on set 3 and set 0 on the first carrier CC 0, the control channels of the second carrier CC 2 are detected on set 2 and set 3 on the first carrier CC 0, the control channels of the second carrier CC 3 are detected on set 1 and set 2 on the first carrier CC 0, and the control channels of the second carrier CC 4 are detected on set 0 and set 1 on the first carrier CC 0.

That the location of the control channel resource set on the first carrier is the same as the location of the control channel resource set on the second carrier specifically may be: as shown in FIG. 6, if set 1 is configured on the second carrier CC 1, set 2 is configured on the second carrier CC 2, and set 3 is configured on the second carrier CC 3, when the control channel of the second carrier CC 1 is detected on the first carrier CC 0, the detection is performed in the location existing on the first carrier CC 0 and corresponding to set 1 configured on the second carrier CC 1; when the control channel of the second carrier CC 2 is detected on the first carrier CC 0, the detection is performed in the location existing on the first carrier CC 0 and corresponding to set 2 configured on the second carrier CC 2; and, when the control channel of the second carrier CC 3 is detected on the first carrier CC 0, the detection is performed in the location existing on the first carrier CC 0 and corresponding to set 3 configured on the second carrier CC 3.

Described above is a method embodiment of performing control channel detection on the UE side. On the base station side, the method for a base station to configure control channels is as follows:

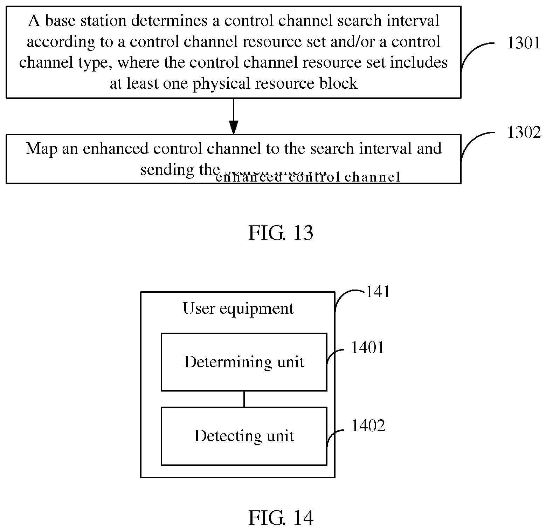

FIG. 13 is a flowchart of a control channel transmission method according to an embodiment of the present invention.

The method may include the following steps:

Step 1301: The base station determines a control channel search space according to a control channel resource set and/or a control channel type, where the control channel resource set includes at least one physical resource block. This step exactly corresponds to the process of determining a control channel search space according to a control channel resource set and/or a control channel type on the UE side. For details, reference may be made to the corresponding description about the UE side, and no repeated description is given here any further.

Step 1302: Map an enhanced control channel to the search space and send the enhanced control channel.

Described above is a method embodiment of the present invention. The following introduces an apparatus for implementing the method.

FIG. 14 is a schematic structural diagram of a first embodiment of a user equipment according to the present invention.

The user equipment 141 may include:

a determining unit 1401, configured to determine a control channel search space according to a control channel resource set and/or a control channel type, where the control channel resource set includes at least one physical resource block; and

a detecting unit 1402, configured to perform control channel detection in the search space determined by the determining unit 1401.

In the embodiment of the present invention, the UE can determine an E-PDCCH search space according to the control channel resource set and/or the control channel type by using the foregoing units, thereby implementing control channel detection of the UE. In this way, a solution is provided for the scenario in which multiple control channel resource sets are configured by a network side for the UE.

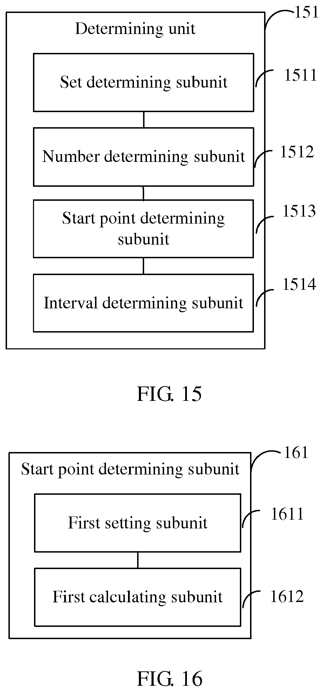

FIG. 15 is a schematic structural diagram of a determining unit according to an embodiment of the present invention.

The determining unit 151 in the user equipment may further include:

a set determining subunit 1511, configured to determine a control channel set that includes the control channel search space;

a number determining subunit 1512, configured to determine the number of control channel candidates of the control channel search space in each control channel set;

a start point determining subunit 1513, configured to determine a search start point of control channels; and

a space determining subunit 1514, configured to determine a search space according to a relationship between the search start point determined by the start point determining subunit, an aggregation level of control channels, and the number of control channel candidates under the aggregation level.

The set determining subunit 1511 may be specifically configured to: determine a control channel resource set that includes a control channel search space according to a carrier and/or a radio network temporary identifier and/or a subframe number; and may be further configured to: when the user equipment has configured scheduling of multiple second carriers on a first carrier, determine, according to a mapping relationship between the second carrier and the control channel resource set, a control channel resource set existing on the first carrier and corresponding to a control channel of the second carrier.

The number determining subunit 1512 may be specifically configured to determine the number of control channel candidates of the control channel search space in each control channel set according to a carrier index ID and/or a radio network temporary identifier and/or a subframe number.

FIG. 16 is a schematic structural diagram of a first embodiment of a start point determining subunit according to the present invention.

Further, the start point determining subunit 161 in the determining unit may specifically include:

a first setting subunit 1611, configured to determine an initial value of the search start point of each control channel resource set in a first subframe; and
a first calculating subunit 1612, configured to obtain the search start point of control channels in a first control channel resource set by using a recursive function according to the search start point of control channels in a second control channel resource set, where
a subframe that includes the second control channel resource set is a subframe previous to the subframe that includes the first control channel resource set, and the first control channel resource set and the second control channel resource set are in the same location in their respective subframes.

In another embodiment, the start point determining subunit may also include:

a second setting subunit, configured to determine an initial value of the search start point of a first control channel resource set in a first subframe; and
a second calculating subunit, configured to obtain the search start point of control channels in a third control channel resource set by using a recursive function according to the search start point of control channels in a fourth control channel resource set, where
the third control channel resource set and the fourth control channel resource set are located in the same subframe, and, in the same subframe, the order of location of the fourth control channel resource set is previous and adjacent to that of the third control channel resource set; or, the fourth control channel resource set is in a subframe previous to the subframe that includes the third control channel resource set, the fourth control channel resource set is the last set in the subframe that includes the fourth control channel resource set, and the third control channel resource set is the first set in the subframe that includes the third control channel resource set.

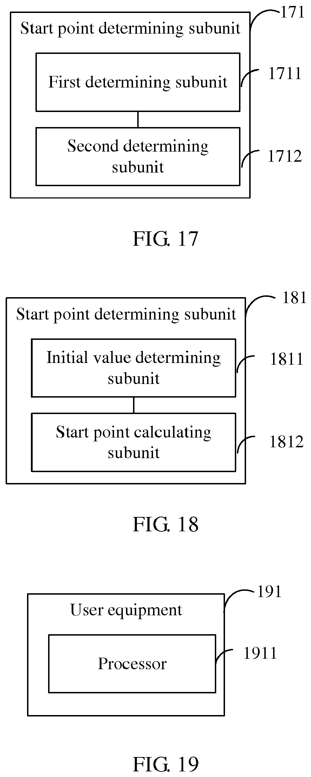

FIG. 17 is a schematic structural diagram of a second embodiment of a start point determining subunit according to the present invention.

Further, the start point determining subunit 171 in the determining unit may specifically include:

a first determining subunit 1711, configured to: when scheduling of multiple second carriers on a first carrier is configured, determine control channel resource sets configured on the first carrier; and
a second determining subunit 1712, configured to: within a space formed by all control channel resource sets on the first carrier, determine a search start point of control channels of the multiple second carriers.

FIG. 18 is a schematic structural diagram of a third embodiment of a start point determining subunit according to the present invention.

Further, the start point determining subunit 181 in the determining unit may specifically include:

an initial value determining subunit 1811, configured to determine an initial value of the recursive function for generating the search start point of control channels; and
a start point calculating subunit 1812, configured to determine the search start point according to the initial value of the recursive function of the search start point and the recursive function.

FIG. 19 is a schematic structural diagram of a second embodiment of a user equipment according to the present invention.

The user equipment 191 includes a processor 1911:

the processor 1911 is configured to determine a control channel search space according to a control channel resource set and/or a control channel type, where the control channel resource set includes at least one physical resource block; and perform control channel detection in the determined search space.

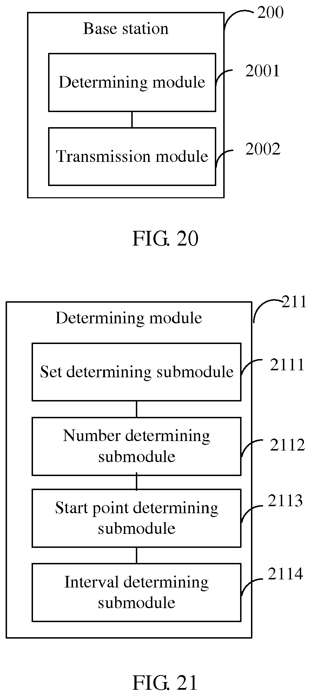

FIG. 20 is a schematic structural diagram of a first embodiment of a base station according to the present invention.
The base station 200 may include:

a determining module 2001, configured to determine a control channel search space according to a control channel resource set and/or a control channel type, where the control channel resource set includes at least one physical resource block; and
a transmission module 2002, configured to map an enhanced control channel to the search space determined by the determining module and send the enhanced control channel.

FIG. 21 is a schematic structural diagram of a determining module according to an embodiment of the present invention.
The determining module 211 may include:

a set determining submodule 2111, configured to determine a control channel set that includes the control channel search space;
a number determining submodule 2112, configured to determine the number of control channel candidates of the control channel search space in each control channel set;
a start point determining submodule 2113, configured to determine a search start point of control channels; and
a space determining submodule 2114, configured to determine a search space according to a relationship between the search start point determined by the start point determining submodule, an aggregation level of control channels, and the number of control channel candidates under the aggregation level.

The set determining submodule 2111 may be specifically configured to: determine a control channel resource set that includes a control channel search space according to a carrier and/or a radio network temporary identifier and/or a subframe number; and may be further configured to: when scheduling of multiple second carriers on a first carrier is configured, determine, according to a mapping relationship between the second carrier and the control channel resource set, a control channel resource set existing on the first carrier and corresponding to a control channel of the second carrier.
The number determining submodule 2112 may be specifically configured to determine the number of control channel candidates of the control channel search space in each control channel set according to a carrier ID and/or a radio network temporary identifier and/or a subframe number.

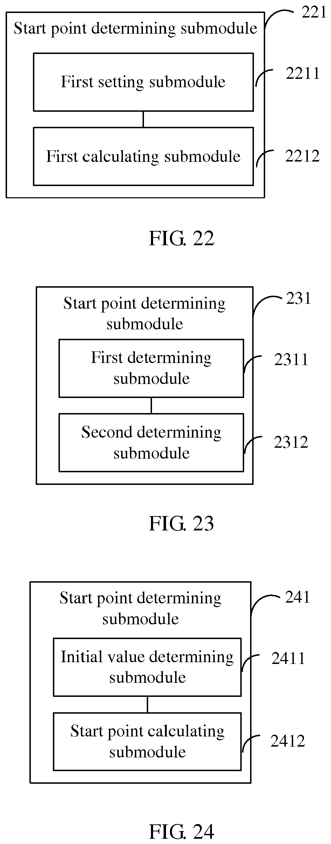

FIG. 22 is a schematic structural diagram of a first embodiment of a start point determining submodule according to the present invention.
Further, the start point determining submodule 221 in the determining module may include:

a first setting submodule 2211, configured to determine an initial value of the search start point of each control channel resource set in a first subframe; and
a first calculating submodule 2212, configured to obtain the search start point of control channels in a first control channel resource set by using a recursive function according to the search start point of control channels in a second control channel resource set, where
a subframe that includes the second control channel resource set is a subframe previous to the subframe that includes the first control channel resource set, and the first control channel resource set and the second control channel resource set are in the same location in their respective subframes.

In another embodiment, the start point determining submodule may also include:

a second setting submodule, configured to determine an initial value of the search start point of a first control channel resource set in a first subframe; and
a second calculating submodule, configured to obtain the search start point of control channels in a third control channel resource set by using a recursive function according to the search start point of control channels in a fourth control channel resource set, where
the third control channel resource set and the fourth control channel resource set are located in the same subframe, and, in the same subframe, the order of location of the fourth control channel resource set is previous and adjacent to that of the third control channel resource set; or, the fourth control channel resource set is in a subframe previous to the subframe that includes the third control channel resource set, the fourth control channel resource set is the last set in the subframe that includes the fourth control channel resource set, and the third control channel resource set is the first set in the subframe that includes the third control channel resource set.

FIG. 23 is a schematic structural diagram of a second embodiment of a start point determining submodule according to the present invention.

Further, the start point determining submodule 231 in the determining module may include:

a first determining submodule 2311, configured to: when scheduling of multiple second carriers on a first carrier is configured, determine control channel resource sets configured on the first carrier; and
a second determining submodule 2312, configured to: within a space formed by all control channel resource sets on the first carrier, determine a search start point of control channels of the multiple second carriers.

FIG. 24 is a schematic structural diagram of a third embodiment of a start point determining submodule according to the present invention.

Further, the start point determining submodule 241 in the determining module may include:

an initial value determining submodule 2411, configured to determine an initial value of the recursive function for generating the search start point of control channels; and
a start point calculating submodule 2412, configured to determine the search start point according to the initial value of the recursive function of the search start point and the recursive function.

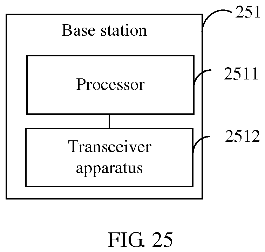

FIG. 25 is a schematic structural diagram of a second embodiment of a base station according to the present invention.

The base station 251 may include a processor 2511 and a transceiver apparatus 2512.

The processor 2511 is configured to determine a control channel search space according to a control channel resource set and/or a control channel type, where the control channel resource set includes at least one physical resource block; and map an enhanced control channel to the determined search space.

The transceiver apparatus 2512 is configured to send the enhanced control channel.

For the detailed implementation process of units and modules in the apparatus, reference may be made to the corresponding description in the method embodiment, and no repeated description is given here any further. The transceiver apparatus may be a transceiver.

A person of ordinary skill in the art may be aware that, with reference to the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to the corresponding process in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device or the like) or a processor (processor) to perform all or a part of the steps of the methods described in the embodiments of the present invention. The foregoing storage medium includes: any mediums capable of storing program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Therefore, the protection scope of the present invention shall be subject to the protection scope of the claims.

**Claims**

1.  A control channel detection method, comprising:

> determining (201), by a user equipment, a control channel search space according to a control channel resource set, wherein the control channel resource set comprises at least one physical resource block; and
> performing (202) control channel detection in the search space;
> wherein the determining (202) a control channel search space comprises:
>
>> determining (301) a control channel resource set that comprises the control channel search space;
>> determining (302) the number of control channel candidates of the control channel search space in each control channel resource set;
>> determining (303) a search start point of control channels; and
>> determining (304) a search space according to a relationship between the search start point, an aggregation level of control channels, and the number of control channel candidates under the aggregation level;
>
> wherein the determining a search start point of control channels comprises:
>
>> determining (701) an initial value of a recursive function for generating the search start point of control channels; and
>> determining (702) the search start point according to the initial value of the recursive function of the search start point and the recursive function;
>
> **characterized in that**:
>
>> in different control channel resource sets, initial values of recursive functions for generating the search start point of control channels are the same; and
>> in different control channel resource sets, the recursive function for determining the search start point is different;
>> wherein the recursive function comprises a second characteristic parameter, and a different control channel resource set corresponds to a different second characteristic parameter.

2.  The method according to claim 1, wherein the recursive function for determining the search start point in the $j^{th}$ control channel resource set is:

$$Y_{k,\ j}=\left(C'(j)\ Y_{k\text{-}1,j}\right)\ \mathrm{mod}D, \quad j=0,1\ldots K\ (c)\text{-}1$$

where k(c) is the total number of control channel resource sets, C'(j) is the second characteristic parameter.

3.  The method according to any one of claims 1 to 2, wherein the second characteristic parameter is one of the following:

> an index of a first physical resource block, PRB, pair among PRB pairs in the control channel resource set; a parameter notified through dynamic signaling or higher-layer signaling; a sequence number index of a physical resource block set; and an offset value relative to a specified control channel resource set.

4. The method according to claim 1, wherein, in different control channel types, the control channel resource set that comprises the control channel search space is determined in different manners.

5. The method according to claim 1, wherein, in different control channel types, the number of control channel candidates of the control channel search space in each control channel resource set is determined in different manners.

6. The method according to any one of claims 4 to 5, wherein different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a User Equipment-specific, UE-specific, search space; control channels of uplink scheduling signaling and control channels of downlink scheduling signaling; control channels of centralized transmission and control channels of discrete transmission; control channels of different downlink control information, DCI; control channels of subframes of different cyclic prefixes; control channels of different special subframe types; control channels transmitted in physical resource block pairs, PRB pairs, with different numbers of available resource elements, REs; control channels transmitted by control channel elements that comprise different numbers of resource element groups; and control channels of different carriers.

7. A control channel transmission method, comprising:

determining (1301), by a base station, a control channel search space according to a control channel resource set, wherein the control channel resource set comprises at least one physical resource block; and
mapping (1302) an enhanced control channel to the search space and sending (1302) the enhanced control channel; wherein the determining a control channel search space comprises:

determining a control channel resource set that comprises the control channel search space;
determining the number of control channel candidates of the control channel search space in each control channel resource set;
determining a search start point of control channels; and
determining a search space according to a relationship between the search start point, an aggregation level of control channels, and the number of control channel candidates under the aggregation level;

wherein the determining a search start point of control channels comprises:

determining an initial value of a recursive function for generating the search start point of control channels; and
determining the search start point according to the initial value of the recursive function of the search start point and the recursive function;

**characterized in that**:

in different control channel resource sets, initial values of recursive functions for generating the search start point of control channels are the same; and
in different control channel resource sets, the recursive function for determining the search start point is different;
wherein the recursive function comprises a second characteristic parameter, and a different control channel resource set corresponds to a different second characteristic parameter.

8. The method according to claim 7, wherein the recursive function for determining the search start point in the $j^{th}$ control channel resource set is:

$$Y_{k,\ j} = (C'(j)\ Y_{k-1,j})\ \text{mod} D, \quad j = 0,1\ldots K\ (c) - 1$$

where k(c) is the total number of control channel resource sets, C'(j) is the second characteristic parameter.

9. The method according to claim 7, wherein the second characteristic parameter is one of the following:

an index of a first physical resource block, PRB, pair among PRB pairs in the control channel resource set; a parameter notified through dynamic signaling or higher-layer signaling; a sequence number index of a physical resource block set; and an offset value relative to a specified control channel resource set.

10. The method according to claim 7, wherein, in different control channel types, the control channel resource set that comprises the control channel search space is determined in different manners.

11. The method according to claim 7, wherein, in different control channel types, the number of control channel candidates of the control channel search space in each control channel resource set is determined in different manners.

12. The method according to any one of claims 10 to 11, wherein different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a User Equipment-specific, UE-specific, search space; control channels of uplink scheduling signaling and control channels of downlink scheduling signaling; control channels of centralized transmission and control channels of discrete transmission; control channels of different downlink control information, DCI; control channels of subframes of different cyclic prefixes; control channels of different special subframe types; control channels transmitted in physical resource block pairs, PRB pairs, with different numbers of available resource elements, REs; control channels transmitted by control channel elements that comprise different numbers of resource element groups; and control channels of different carriers.

13. A user equipment, comprising:

a determining unit, configured to determine a control channel search space according to a control channel resource set, wherein the control channel resource set comprises at least one physical resource block; and
a detecting unit, configured to perform control channel detection in the search space determined by the determining unit; wherein the determining unit comprises:

a set determining subunit, configured to determine a control channel resource set that comprises the control channel search space;
a number determining subunit, configured to determine the number of control channel candidates of the control channel search space in each control channel resource set;
a start point determining subunit, configured to determine a search start point of control channels; and
a space determining subunit, configured to determine a search space according to a relationship between the search start point determined by the start point determining subunit, an aggregation level of control channels, and the number of control channel candidates under the aggregation level;

wherein the start point determining subunit comprises:

an initial value determining subunit, configured to determine an initial value of the recursive function for generating the search start point of control channels; and
a start point calculating subunit, configured to determine the search start point according to the initial value of the recursive function of the search start point and the recursive function;

**characterized in that**:

in different control channel resource sets, initial values of recursive functions for generating the search start point of control channels are the same; and
in different control channel resource sets, the recursive function for determining the search start point is different;

wherein the recursive function comprises a second characteristic parameter, and a different control channel resource set corresponds to a different second characteristic parameter.

14. The user equipment according to claim 13, wherein the recursive function for determining the search start point in the j$^{th}$ control channel resource set is:

$$Y_{k,\,j} = \left( C'(j)\ Y_{k-1,j} \right)\ \mathrm{mod} D, \quad j = 0,1\ldots K\ (c)-1$$

where k(c) is the total number of control channel resource sets, C'(j) is the second characteristic parameter.

15. The user equipment according to claim 13, wherein, in different control channel types, the control channel resource set that comprises the control channel search space is determined in different manners.

16. The user equipment according to claim 13, wherein, in different control channel types, the number of control channel candidates of the control channel search space in each control channel resource set is determined in different manners.

17. The user equipment according to any one of claims 15 to 16, wherein different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a User Equipment-specific, UE-specific, search space; control channels of uplink scheduling signaling and control channels of downlink scheduling signaling; control channels of centralized transmission and control channels of discrete transmission; control channels of different downlink control information, DCI; control channels of subframes of different cyclic prefixes; control channels of different special subframe types; control channels transmitted in physical resource block pairs, PRB pairs, with different numbers of available resource elements, REs; control channels transmitted by control channel elements that comprise different numbers of resource element groups; and control channels of different carriers.

18. A base station, comprising:

a determining module, configured to determine a control channel search space according to a control channel resource set, wherein the control channel resource set comprises at least one physical resource block; and
a transmission module, configured to map an enhanced control channel to the search space determined by the determining module and send the enhanced control channel; wherein the determining module comprises:

a set determining submodule, configured to determine a control channel resource set that comprises the control channel search space;
a number determining submodule, configured to determine the number of control channel candidates of the control channel search space in each control channel resource set;
a start point determining submodule, configured to determine a search start point of control channels; and
a space determining submodule, configured to determine a search space according to a relationship between the search start point determined by the start point determining submodule, an aggregation level of control channels, and the number of control channel candidates under the aggregation level;

wherein the start point determining submodule comprises:

an initial value determining submodule, configured to determine an initial value of the recursive function for generating the search start point of control channels; and
a start point calculating submodule, configured to determine the search start point according to the initial value of the recursive function of the search start point and the recursive function;

**characterized in that**:

in different control channel resource sets, initial values of recursive functions for generating the search start point of control channels are the same; and
in different control channel resource sets, the recursive function for determining the search start point is different;
wherein the recursive function comprises a second characteristic parameter, and a different control channel resource set corresponds to a different second characteristic parameter.

19. The base station according to claim 18, wherein the recursive function for determining the search start point in the $j^{th}$ control channel resource set is:

$$Y_{k,\ j} = \left( C'(j)\ \ Y_{k-1,j} \right)\ \bmod D, \quad j = 0,1 \ldots K\ (c)-1$$

where k(c) is the total number of control channel resource sets, C'(j) is the second characteristic parameter.

20. The base station according to claim 18, wherein, in different control channel types, the control channel resource set that comprises the control channel search space is determined in different manners.

21. The base station according to claim 18, wherein, in different control channel types, the number of control channel candidates of the control channel search space in each control channel resource set is determined in different manners.

22. The base station according to any one of claims 20 to 21, wherein different control channel types are attributable to any one of the following groups:

control channels of a normal subframe and control channels of a multimedia broadcast multicast service single-frequency network subframe; semi-statically scheduled control channels and dynamically scheduled control channels; control channels detected in a common search space and control channels detected in a User Equipment-specific, UE-specific, search space; control channels of uplink scheduling signaling and control channels of downlink scheduling signaling; control channels of centralized transmission and control channels of discrete transmission; control channels of different downlink control information, DCI; control channels of subframes of different cyclic prefixes; control channels of different special subframe types; control channels transmitted in physical resource block pairs, PRB pairs, with different numbers of available resource elements, REs; control channels transmitted by control channel elements that comprise different numbers of resource element groups; and control channels of different carriers.

**Patentansprüche**

1. Steuerkanaldetektionsverfahren, das Folgendes umfasst:

Bestimmen (201), durch eine Nutzerausrüstung, eines Steuerkanalsuchraumes gemäß einem Steuerkanalressourcensatz, wobei der Steuerkanalressourcensatz mindestens einen physischen Ressourcenblock umfasst; und
Ausführen (202) einer Steuerkanaldetektion in dem Suchraum;
wobei das Bestimmen (202) eines Steuerkanalsuchraumes Folgendes umfasst:

Bestimmen (301) eines Steuerkanalressourcensatzes, der den Steuerkanalsuchraum umfasst;
Bestimmen (302) der Anzahl von Steuerkanalkandidaten des Steuerkanalsuchraumes in jedem Steuerkanalressourcensatz;
Bestimmen (303) eines Suchestartpunktes von Steuerkanälen; und
Bestimmen (304) eines Suchraumes gemäß einer Beziehung zwischen dem Suchestartpunkt, einem Aggregationsniveau von Steuerkanälen und der Anzahl von Steuerkanalkandidaten unter dem Aggregationsniveau;

wobei das Bestimmen eines Suchestartpunktes von Steuerkanälen Folgendes umfasst:

Bestimmen (701) eines Anfangswertes einer rekursiven Funktion zum Generieren des Suchestartpunktes von Steuerkanälen; und
Bestimmen (702) des Suchestartpunktes gemäß dem Anfangswert der rekursiven Funktion des Suchestartpunktes und der rekursiven Funktion;

**dadurch gekennzeichnet, dass**:

in verschiedenen Steuerkanalressourcensätzen Anfangswerte von rekursiven Funktionen zum Generieren des Suchestartpunktes von Steuerkanälen die gleichen sind; und

in verschiedenen Steuerkanalressourcensätzen die rekursive Funktion zum Bestimmen des Suchestartpunktes verschieden ist;

wobei die rekursive Funktion einen zweiten kennzeichnenden Parameter umfasst und ein anderer Steuerkanalressourcensatz einem anderen zweiten kennzeichnenden Parameter entspricht.

2. Verfahren nach Anspruch 1, wobei die rekursive Funktion zum Bestimmen des Suchestartpunktes in dem j-ten Steuerkanalressourcensatz lautet:

$$Y_{k,j} = (C'(j)\, Y_{k-1,j})\, \mathrm{mod}\, D,\ j = 0,\, 1, \ldots, K(c) - 1$$

wobei k(c) die Gesamtzahl an Steuerkanalressourcensätzen ist und C'(j) der zweite kennzeichnende Parameter ist.

3. Verfahren nach einem der Ansprüche 1 und 2, wobei der zweite kennzeichnende Parameter einer von folgenden ist:

ein Index eines ersten Physischen Ressourcenblock (PRB)-Paares unter PRB-Paaren in dem Steuerkanalressourcensatz; ein Parameter, der durch dynamische Zeichengabe oder Zeichengabe einer höheren Schicht bekannt gegeben wird; ein Folgenummernindex eines physischen Ressourcenblocksatzes; und ein Versatzwert relativ zu einem spezifizierten Steuerkanalressourcensatz.

4. Verfahren nach Anspruch 1, wobei, in verschiedenen Steuerkanalarten, der Steuerkanalressourcensatz, der den Steuerkanalsuchraum umfasst, auf verschiedene Weisen bestimmt wird.

5. Verfahren nach Anspruch 1, wobei, in verschiedenen Steuerkanalarten, die Anzahl von Steuerkanalkandidaten des Steuerkanalsuchraumes in jedem Steuerkanalsatz auf verschiedene Weisen bestimmt wird.

6. Verfahren nach einem der Ansprüche 4 und 5, wobei verschiedene Steuerkanalarten einer der folgenden Gruppen zugerechnet werden können:

Steuerkanäle eines normalen Subframes und Steuerkanäle eines "Multimedia Broadcast Multicast Service Single-Frequency Network"-Subframes; halbstatisch disponierte Steuerkanäle und dynamisch disponierte Steuerkanäle; Steuerkanäle, die in einem gemeinsamen Suchraum detektiert werden, und Steuerkanäle, die in einem nutzerausrüstungsspezifischen (UE-spezifischen) Suchraum detektiert werden; Steuerkanäle einer Uplink-Disponierungszeichengabe und Steuerkanäle einer Downlink-Disponierungszeichengabe; Steuerkanäle von zentralisierten Übertragungs- und Steuerkanälen einer diskreten Übertragung; Steuerkanäle von verschiedenen Downlink-Steuerungsinformationen (Downlink Control Information, DCI); Steuerkanäle von Subframes von verschiedenen zyklischen Präfixen; Steuerkanäle von verschiedenen speziellen Subframe-Arten; Steuerkanäle, die in physischen Ressourcenblockpaaren (PRB-Paaren) mit verschiedenen Anzahlen verfügbarer Ressourcenelemente (REs) übertragen werden; Steuerkanäle, die durch Steuerkanalelemente übertragen werden, die verschiedene Anzahlen von Ressourcenelement-Gruppen umfassen; und Steuerkanäle von verschiedenen Trägern.

7. Steuerkanalübertragungsverfahren, das Folgendes umfasst:

Bestimmen (1301), durch eine Basisstation, eines Steuerkanalsuchraumes gemäß einem Steuerkanalressourcensatz, wobei der Steuerkanalressourcensatz mindestens einen physischen Ressourcenblock umfasst; und Abbilden (1302) eines erweiterten Steuerkanals auf den Suchraum und Senden (1302) des erweiterten Steuerkanals; wobei das Bestimmen eines Steuerkanalsuchraumes Folgendes umfasst:

Bestimmen eines Steuerkanalressourcensatzes, der den Steuerkanalsuchraum umfasst; Bestimmen der Anzahl von Steuerkanalkandidaten des Steuerkanalsuchraumes in jedem Steuerkanalressourcensatz;

Bestimmen eines Suchestartpunktes von Steuerkanälen; und

Bestimmen eines Suchraumes gemäß einer Beziehung zwischen dem Suchestartpunkt, einem Aggregationsniveau von Steuerkanälen und der Anzahl von Steuerkanalkandidaten unter dem Aggregationsniveau; wobei das Bestimmen eines Suchestartpunktes von Steuerkanälen Folgendes umfasst:

Bestimmen eines Anfangswertes einer rekursiven Funktion zum Generieren des Suchestartpunktes von Steuerkanälen; und

Bestimmen des Suchestartpunktes gemäß dem Anfangswert der rekursiven Funktion des Suchestartpunktes und der rekursiven Funktion;

**dadurch gekennzeichnet, dass**:

in verschiedenen Steuerkanalressourcensätzen Anfangswerte von rekursiven Funktionen zum Generieren des Suchestartpunktes von Steuerkanälen die gleichen sind; und

in verschiedenen Steuerkanalressourcensätzen die rekursive Funktion zum Bestimmen des Suchestartpunktes verschieden ist;

wobei die rekursive Funktion einen zweiten kennzeichnenden Parameter umfasst und ein anderer Steuerkanalressourcensatz einem anderen zweiten kennzeichnenden Parameter entspricht.

8. Verfahren nach Anspruch 7, wobei die rekursive Funktion zum Bestimmen des Suchestartpunktes in dem j-ten Steuerkanalressourcensatz lautet:

$$Y_{k,j} = (C'(j)\ Y_{k-1,j})\ modD,\ j = 0,\ 1,\ldots,\ K(c)\ -1$$

wobei k(c) die Gesamtzahl an Steuerkanalressourcensätzen ist und C'(j) der zweite kennzeichnende Parameter ist.

9. Verfahren nach Anspruch 7, wobei der zweite kennzeichnende Parameter einer von folgenden ist:

ein Index eines ersten Physischen Ressourcenblock(PRB)-Paares unter PRB-Paaren in dem Steuerkanalressourcensatz; ein Parameter, der durch dynamische Zeichengabe oder Zeichengabe einer höheren Schicht bekannt gegeben wird; ein Folgenummernindex eines physischen Ressourcenblocksatzes; und ein Versatzwert relativ zu einem spezifizierten Steuerkanalressourcensatz.

10. Verfahren nach Anspruch 7, wobei, in verschiedenen Steuerkanalarten, der Steuerkanalressourcensatz, der den Steuerkanalsuchraum umfasst, auf verschiedene Weisen bestimmt wird.

11. Verfahren nach Anspruch 7, wobei, in verschiedenen Steuerkanalarten, die Anzahl von Steuerkanalkandidaten des Steuerkanalsuchraumes in jedem Steuerkanalressourcensatz auf verschiedene Weisen bestimmt wird.

12. Verfahren nach einem der Ansprüche 10 und 11, wobei verschiedene Steuerkanalarten einer der folgenden Gruppen zugerechnet werden können:

Steuerkanäle eines normalen Subframes und Steuerkanäle eines "Multimedia Broadcast Multicast Service Single-Frequency Network"-Subframes; halbstatisch disponierte Steuerkanäle und dynamisch disponierte Steuerkanäle; Steuerkanäle, die in einem gemeinsamen Suchraum detektiert werden, und Steuerkanäle, die in einem nutzerausrüstungsspezifischen (UE-spezifischen) Suchraum detektiert werden; Steuerkanäle einer Uplink-Disponierungszeichengabe und Steuerkanäle einer Downlink-Disponierungszeichengabe; Steuerkanäle von zentralisierten Übertragungs- und Steuerkanälen einer diskreten Übertragung; Steuerkanäle von verschiedenen Downlink-Steuerungsinformationen (Downlink Control Information, DCI); Steuerkanäle von Subframes von verschiedenen zyklischen Präfixen; Steuerkanäle von verschiedenen speziellen Subframe-Arten; Steuerkanäle, die in physischen Ressourcenblockpaaren (PRB-Paaren) mit verschiedenen Anzahlen verfügbarer Ressourcenelemente (REs) übertragen werden; Steuerkanäle, die durch Steuerkanalelemente übertragen werden, die verschiedene Anzahlen von Ressourcenelement-Gruppen umfassen; und Steuerkanäle von verschiedenen Trägern.

13. Nutzerausrüstung, die Folgendes umfasst:

eine Bestimmungseinheit, die dafür konfiguriert ist, einen Steuerkanalsuchraum gemäß einem Steuerkanalressourcensatz zu bestimmen, wobei der Steuerkanalressourcensatz mindestens einen physischen Ressourcenblock umfasst; und

eine Detektionseinheit, die dafür konfiguriert ist, eine Steuerkanaldetektion in dem durch die Bestimmungseinheit bestimmten Suchraum auszuführen; wobei die Bestimmungseinheit Folgendes umfasst:

eine Satzbestimmungs-Untereinheit, die dafür konfiguriert ist, einen Steuerkanalressourcensatz zu bestimmen, der den Steuerkanalsuchraum umfasst;

eine Anzahlbestimmungs-Untereinheit, die dafür konfiguriert ist, die Anzahl von Steuerkanalkandidaten des Steuerkanalsuchraumes in jedem Steuerkanalressourcensatz zu bestimmen;

eine Startpunktbestimmungs-Untereinheit, die dafür konfiguriert ist, einen Suchestartpunkt von Steuerkanälen zu bestimmen; und

eine Raumbestimmungs-Untereinheit, die dafür konfiguriert ist, einen Suchraum gemäß einer Beziehung zwischen dem durch die Startpunktbestimmungs-Untereinheit bestimmten Suchestartpunkt, einem Aggregationsniveau von Steuerkanälen und der Anzahl von Steuerkanalkandidaten unter dem Aggregationsniveau zu bestimmen;

wobei die Startpunktbestimmungs-Untereinheit Folgendes umfasst:

eine Anfangswertbestimmungs-Untereinheit, die dafür konfiguriert ist, einen Anfangswert der rekursiven Funktion zum Generieren des Suchestartpunktes von Steuerkanälen zu bestimmen; und

eine Startpunktberechnungs-Untereinheit, die dafür konfiguriert ist, den Suchestartpunkt gemäß dem Anfangswert der rekursiven Funktion des Suchestartpunktes und der rekursiven Funktion zu bestimmen;

**dadurch gekennzeichnet, dass**:

in verschiedenen Steuerkanalressourcensätzen Anfangswerte von rekursiven Funktionen zum Generieren des Suchestartpunktes von Steuerkanälen die gleichen sind; und

in verschiedenen Steuerkanalressourcensätzen die rekursive Funktion zum Bestimmen des Suchestartpunktes verschieden ist;

wobei die rekursive Funktion einen zweiten kennzeichnenden Parameter umfasst und ein anderer Steuerkanalressourcensatz einem anderen zweiten kennzeichnenden Parameter entspricht.

14. Nutzerausrüstung nach Anspruch 13, wobei die rekursive Funktion zum Bestimmen des Suchestartpunktes in dem j-ten Steuerkanalressourcensatz lautet:

$$Y_{k, j} = (C'(j)\, Y_{k-1, j})\, mod D, \quad j = 0, 1, \ldots, K(c) -1$$

wobei k(c) die Gesamtzahl an Steuerkanalressourcensätzen ist und C'(j) der zweite kennzeichnende Parameter ist.

15. Nutzerausrüstung nach Anspruch 13, wobei, in verschiedenen Steuerkanalarten, der Steuerkanalressourcensatz, der den Steuerkanalsuchraum umfasst, auf verschiedene Weisen bestimmt wird.

16. Nutzerausrüstung nach Anspruch 13, wobei, in verschiedenen Steuerkanalarten, die Anzahl von Steuerkanalkandidaten des Steuerkanalsuchraumes in jedem Steuerkanalressourcensatz auf verschiedene Weisen bestimmt wird.

17. Nutzerausrüstung nach einem der Ansprüche 15 und 16, wobei verschiedene Steuerkanalarten einer der folgenden Gruppen zugerechnet werden können:

Steuerkanäle eines normalen Subframes und Steuerkanäle eines "Multimedia Broadcast Multicast Service Single Frequency Network"-Subframes; halbstatisch disponierte Steuerkanäle und dynamisch disponierte Steuerkanäle; Steuerkanäle, die in einem gemeinsamen Suchraum detektiert werden, und Steuerkanäle, die in einem nutzerausrüstungsspezifischen (UE-spezifischen) Suchraum detektiert werden; Steuerkanäle einer Uplink-Disponierungszeichengabe und Steuerkanäle einer Downlink-Disponierungszeichengabe; Steuerkanäle von zentralisierten Übertragungs- und Steuerkanälen einer diskreten Übertragung; Steuerkanäle von verschiedenen Downlink-Steuerungsinformationen (Downlink Control Information, DCI); Steuerkanäle von Subframes von verschiedenen zyklischen Präfixen; Steuerkanäle von verschiedenen speziellen Subframe-Arten; Steuerkanäle, die in physischen Ressourcenblockpaaren (PRB-Paaren) mit verschiedenen Anzahlen verfügbarer Ressourcenelemente (REs) übertragen werden; Steuerkanäle, die durch Steuerkanalelemente übertragen werden, die verschiedene Anzahlen von Ressourcenelement-Gruppen umfassen; und Steuerkanäle von verschiedenen Trägern.

18. Basisstation, die Folgendes umfasst:

ein Bestimmungsmodul, das dafür konfiguriert ist, einen Steuerkanalsuchraum gemäß einem Steuerkanalressourcensatz zu bestimmen, wobei der Steuerkanalressourcensatz mindestens einen physischen Ressourcenblock umfasst; und
ein Übertragungsmodul, das dafür konfiguriert ist, einen erweiterten Steuerkanal auf den durch das Bestimmungsmodul bestimmten Suchraum abzubilden und den erweiterten Steuerkanal zu senden; wobei das Bestimmungsmodul Folgendes umfasst:

ein Satzbestimmungs-Untermodul, das dafür konfiguriert ist, einen Steuerkanalressourcensatz zu bestimmen, der den Steuerkanalsuchraum umfasst;
ein Anzahlbestimmungs-Untermodul, das dafür konfiguriert ist, die Anzahl von Steuerkanalkandidaten des Steuerkanalsuchraumes in jedem Steuerkanalressourcensatz zu bestimmen;
ein Startpunktbestimmungs-Untermodul, das dafür konfiguriert ist, einen Suchestartpunkt von Steuerkanälen zu bestimmen; und
ein Raumbestimmungs-Untermodul, das dafür konfiguriert ist, einen Suchraum gemäß einer Beziehung zwischen dem durch das Startpunktbestimmungs-Untermodul bestimmten Suchestartpunkt, einem Aggregationsniveau von Steuerkanälen und der Anzahl von Steuerkanalkandidaten unter dem Aggregationsniveau zu bestimmen;

wobei das Startpunktbestimmungs-Untermodul Folgendes umfasst:

ein Anfangswertbestimmungs-Untermodul, das dafür konfiguriert ist, einen Anfangswert der rekursiven Funktion zum Generieren des Suchestartpunktes von Steuerkanälen zu bestimmen; und
ein Startpunktberechnungs-Untermodul, das dafür konfiguriert ist, den Suchestartpunkt gemäß dem Anfangswert der rekursiven Funktion des Suchestartpunktes und der rekursiven Funktion zu bestimmen;

**dadurch gekennzeichnet, dass**:

in verschiedenen Steuerkanalressourcensätzen Anfangswerte von rekursiven Funktionen zum Generieren des Suchestartpunktes von Steuerkanälen die gleichen sind; und
in verschiedenen Steuerkanalressourcensätzen die rekursive Funktion zum Bestimmen des Suchestartpunktes verschieden ist;
wobei die rekursive Funktion einen zweiten kennzeichnenden Parameter umfasst und ein anderer Steuerkanalressourcensatz einem anderen zweiten kennzeichnenden Parameter entspricht.

19. Basisstation nach Anspruch 18, wobei die rekursive Funktion zum Bestimmen des Suchestartpunktes in dem j-ten Steuerkanalressourcensatz lautet:

$$Y_{k,\,j} = \left( C'(j)\ Y_{k-1,j} \right)\ \mathrm{mod}\,D,\quad j = 0,1\ldots K\ (c)-1$$

wobei k(c) die Gesamtzahl an Steuerkanalressourcensätzen ist und C'(j) der zweite kennzeichnende Parameter ist.

20. Basisstation nach Anspruch 18, wobei, in verschiedenen Steuerkanalarten, der Steuerkanalressourcensatz, der den Steuerkanalsuchraum umfasst, auf verschiedene Weisen bestimmt wird.

21. Basisstation nach Anspruch 18, wobei, in verschiedenen Steuerkanalarten, die Anzahl von Steuerkanalkandidaten des Steuerkanalsuchraumes in jedem Steuerkanalressourcensatz auf verschiedene Weisen bestimmt wird.

22. Basisstation nach einem der Ansprüche 20 und 21, wobei verschiedene Steuerkanalarten einer der folgenden Gruppen zugerechnet werden können:, Steuerkanäle eines normalen Subframes und Steuerkanäle eines "Multimedia Broadcast Multicast Service Single-Frequency Network"-Subframes; halbstatisch disponierte Steuerkanäle und dynamisch disponierte Steuerkanäle; Steuerkanäle, die in einem gemeinsamen Suchraum detektiert werden, und Steuerkanäle, die in einem nutzerausrüstungsspezifischen (UE-spezifischen) Suchraum detektiert werden; Steuerkanäle einer Uplink-Disponierungszeichengabe und Steuerkanäle einer Downlink-Disponierungszeichengabe; Steuerkanäle von zentralisierten Übertragungs- und Steuerkanälen einer diskreten Übertragung; Steuerkanäle von verschiedenen Downlink-Steuerungsinformationen (Downlink Control Information, DCI); Steuerkanäle von Subframes von verschiedenen zyklischen Präfixen; Steuerkanäle von verschiedenen speziellen Subframe-Arten; Steuerkanäle, die in physischen Ressourcenblockpaaren (PRB-Paaren) mit verschiedenen Anzahlen verfügbarer Ressourcenelemente (REs) übertragen werden; Steuerkanäle, die durch Steuerkanalelemente übertragen werden, die verschiedene Anzahlen von Ressourcenelement-Gruppen umfassen; und Steuerkanäle von verschiedenen Trägern.

**Revendications**

1. Procédé de commande de détection de canal de commande, consistant à :

    déterminer (201), au moyen d'un équipement utilisateur, un espace de recherche de canal de commande en fonction d'un ensemble de ressources de canal de commande, dans lequel l'ensemble de ressources de canal de commande comprend au moins un bloc de ressource physique ; et
    effectuer (202) une détection de canal de commande dans l'espace de recherche ;
    dans lequel la détermination (202) d'un espace de recherche de canal de commande consiste à :

        déterminer (301) un ensemble de ressources de canal de commande qui comprend l'espace de recherche de canal de commande ;
        déterminer (302) le nombre de candidats canaux de commande de l'espace de recherche de canal de commande dans chaque ensemble de ressources de canal de commande ;
        déterminer (303) un point de départ de recherche des canaux de commande ; et
        déterminer (304) un espace de recherche en fonction d'une relation entre le point de départ de recherche, un niveau d'agrégation des canaux de commande et le nombre de candidats canaux de commande dans le niveau d'agrégation ;

    dans lequel la détermination d'un point de départ de recherche des canaux de commande consiste à :

        déterminer (701) une valeur initiale d'une fonction récursive pour générer le point de départ de recherche des canaux de commande ; et
        déterminer (702) le point de départ de recherche en fonction de la valeur initiale de la fonction récursive du point de départ de recherche et de la fonction récursive ;

    **caractérisé en ce que** :

        dans différents ensembles de ressources de canal de commande, les valeurs initiales des fonctions récursives pour générer le point de départ de recherche des canaux de commande sont les mêmes ; et
        dans différents ensembles de ressources de canal de commande, la fonction récursive pour déterminer le point de départ de recherche est différente ;
        dans lequel la fonction récursive comprend un second paramètre caractéristique et un ensemble de ressources de canal de commande différent correspond à un second paramètre caractéristique différent.

2. Procédé selon la revendication 1, dans lequel la fonction récursive pour déterminer le point de départ de recherche dans le $j^{eme}$ ensemble de ressources de canal de commande est :

$$Y_{k,j} = (C'(j)\, Y_{k-1,j})\, \mathrm{mod}D, \ j = 0, 1,\ldots, K(c) - 1$$

où k(c) est le nombre total d'ensembles de ressources de canal de commande, C'(j) est le second paramètre caractéristique.

3. Procédé selon l'une quelconque de la revendication 1 ou 2, dans lequel le second paramètre caractéristique est l'un des éléments suivants :

un indice d'une première paire de blocs de ressource physique, PRB, parmi des paires de blocs PRB dans l'ensemble de ressources de canal de commande ; un paramètre notifié au moyen d'une signalisation dynamique ou d'une signalisation de couche supérieure ; un indice de numéro de séquence d'un ensemble de blocs de ressource physique ; et une valeur de décalage par rapport à un ensemble de ressources de canal de commande spécifié.

4. Procédé selon la revendication 1, dans lequel, dans différents types de canal de commande, l'ensemble de ressources de canal de commande qui comprend l'espace de recherche de canal de commande, est déterminé de différentes manières.

5. Procédé selon la revendication 1, dans lequel, dans différents types de canal de commande, le nombre de candidats canaux de commande de l'espace de recherche de canal de commande dans chaque ensemble de ressources de canal de commande est déterminé de différentes manières.

6. Procédé selon l'une quelconque des revendications 4 à 5, dans lequel différents types de canal de commande peuvent être attribués à l'un quelconque des groupes suivants :

des canaux de commande d'une sous-trame normale et des canaux de commande d'une sous-trame de réseau monofréquence de service de diffusion/multidiffusion multimédia ; des canaux de commande ordonnés de manière semi-statique et des canaux de commande ordonnés de manière dynamique ; des canaux de commande détectés dans un espace de recherche commun et des canaux de commande détectés dans un espace de recherche spécifique à un équipement utilisateur, spécifique à un UE ; des canaux de commande d'une signalisation d'ordonnancement de liaison montante et des canaux de commande d'une signalisation d'ordonnancement de liaison descendante ; des canaux de commande d'une transmission centralisée et des canaux de commande d'une transmission discrète ; des canaux de commande de différentes informations de commande de liaison descendante, DCI ; des canaux de commande de sous-trames de différents préfixes cycliques ; des canaux de commande de différents types de sous-trame spéciale ; des canaux de commande transmis dans des paires de blocs de ressources physiques, paires de blocs PRB, avec différents nombres d'éléments de ressource, RE, disponibles ; des canaux de commande transmis par des éléments de canal de commande qui comprennent différents nombres de groupes d'éléments de ressource ; et des canaux de commande de différentes porteuses.

7. Procédé de transmission de canal de commande, consistant à :

déterminer (1301), au moyen d'une station de base, un espace de recherche de canal de commande en fonction d'un ensemble de ressources de canal de commande, dans lequel l'ensemble de ressources de canal de commande comprend au moins un bloc de ressource physique ; et
faire correspondre (1302) un canal de commande amélioré à l'espace de recherche et envoyer (1302) le canal de commande amélioré ; dans lequel la détermination d'un espace de recherche de canal de commande consiste à :

déterminer un ensemble de ressources de canal de commande qui comprend l'espace de recherche de canal de commande ;
déterminer le nombre de candidats canaux de commande de l'espace de recherche de canal de commande dans chaque ensemble de ressources de canal de commande ;
déterminer un point de départ de recherche des canaux de commande ; et
déterminer un espace de recherche en fonction d'une relation entre le point de départ de recherche, un niveau d'agrégation des canaux de commande et le nombre de candidats canaux de commande dans le niveau d'agrégation ;

dans lequel la détermination d'un point de départ de recherche des canaux de commande consiste à :

déterminer une valeur initiale d'une fonction récursive pour générer le point de départ de recherche des canaux de commande ; et
déterminer le point de départ de recherche en fonction de la valeur initiale de la fonction récursive du point de départ de recherche et de la fonction récursive ;

**caractérisé en ce que** :

dans différents ensembles de ressources de canal de commande, les valeurs initiales des fonctions récursives pour générer le point de départ de recherche des canaux de commande sont les mêmes ; et
dans différents ensembles de ressources de canal de commande, la fonction récursive pour déterminer le point de départ de recherche est différente ;
dans lequel la fonction récursive comprend un second paramètre caractéristique et un ensemble de ressources de canal de commande différent correspond à un second paramètre caractéristique différent.

8. Procédé selon la revendication 7, dans lequel la fonction récursive pour déterminer le point de départ de recherche dans le $j^{eme}$ ensemble de ressources de canal de commande est :

$$Y_{k,j} = (C'(j)\ Y_{k-1,j})\ modD,\ j = 0,\ 1,\ldots,\ K(c)\ \text{-}1$$

où k(c) est le nombre total d'ensembles de ressources de canal de commande, C'(j) est le second paramètre caractéristique.

9. Procédé selon la revendication 7, dans lequel le second paramètre caractéristique est l'une des éléments suivants :

un indice d'une première paire de blocs de ressource physique, PRB, parmi des paires de blocs PRB dans l'ensemble de ressources de canal de commande ; un paramètre notifié au moyen d'une signalisation dynamique ou d'une signalisation de couche supérieure ; un indice de numéro de séquence d'un ensemble de blocs de ressource physique ; et une valeur de décalage par rapport à un ensemble de ressources de canal de commande spécifié.

10. Procédé selon la revendication 7, dans lequel, dans différents types de canal de commande, l'ensemble de ressources de canal de commande qui comprend l'espace de recherche de canal de commande, est déterminé de différentes manières.

11. Procédé selon la revendication 7, dans lequel, dans différents types de canal de commande, le nombre de candidats canaux de commande de l'espace de recherche de canal de commande dans chaque ensemble de ressources de canal de commande est déterminé de différentes manières.

12. Procédé selon l'une quelconque des revendications 10 à 11, dans lequel différents types de canal de commande peuvent être attribués à l'un quelconque des groupes suivants :

des canaux de commande d'une sous-trame normale et des canaux de commande d'une sous-trame de réseau monofréquence de service de diffusion/multidiffusion multimédia ; des canaux de commande ordonnés de manière semi-statique et des canaux de commande ordonnés de manière dynamique ; des canaux de commande détectés dans un espace de recherche commun et des canaux de commande détectés dans un espace de recherche spécifique à un équipement utilisateur, spécifique à un UE ; des canaux de commande d'une signalisation d'ordonnancement de liaison montante et des canaux de commande d'une signalisation d'ordonnancement de liaison descendante ; des canaux de commande d'une transmission centralisée et des canaux de commande d'une transmission discrète ; des canaux de commande de différentes informations de commande de liaison descendante, DCI ; des canaux de commande de sous-trames de différents préfixes cycliques ; des canaux de commande de différents types de sous-trame spéciale ; des canaux de commande transmis dans des paires de blocs de ressources physiques, paires de blocs PRB, avec différents nombres d'éléments de ressource, RE, disponibles ; des canaux de commande transmis par des éléments de canal de commande qui comprennent différents nombres de groupes d'éléments de ressource ; et des canaux de commande de différentes porteuses.

13. Équipement utilisateur, comprenant :

une unité de détermination, configurée pour déterminer un espace de recherche de canal de commande en fonction d'un ensemble de ressources de canal de commande, dans lequel l'ensemble de ressources de canal de commande comprend au moins un bloc de ressource physique ; et

une unité de détection, configurée pour effectuer une détection de canal de commande dans l'espace de recherche déterminé par l'unité de détermination ; dans lequel l'unité de détermination comprend :

une sous-unité de détermination d'ensemble, configurée pour déterminer un ensemble de ressources de canal de commande qui comprend l'espace de recherche de canal de commande ;

une sous-unité de détermination de nombre, configurée pour déterminer le nombre de candidats canaux de commande de l'espace de recherche de canal de commande dans chaque ensemble de ressources de canal de commande ;

une sous-unité de détermination de point de départ, configurée pour déterminer un point de départ de recherche des canaux de commande ; et

une sous-unité de détermination d'espace, configurée pour déterminer un espace de recherche en fonction d'une relation entre le point de départ de recherche déterminé par la sous-unité de détermination de point de départ, un niveau d'agrégation des canaux de commande et le nombre de candidats canaux de commande dans le niveau d'agrégation ;

dans lequel la sous-unité de détermination de point de départ comprend :

une sous-unité de détermination de valeur initiale, configurée pour déterminer une valeur initiale de la fonction récursive pour générer le point de départ de recherche des canaux de commande ; et

une sous-unité de calcul de point de départ, configurée pour déterminer le point de départ de recherche en fonction de la valeur initiale de la fonction récursive du point de départ de recherche et de la fonction récursive ;

**caractérisé en ce que** :

dans différents ensembles de ressources de canal de commande, les valeurs initiales des fonctions récursives pour générer le point de départ de recherche des canaux de commande sont les mêmes ; et

dans différents ensembles de ressources de canal de commande, la fonction récursive pour déterminer le point de départ de recherche est différente ;

dans lequel la fonction récursive comprend un second paramètre caractéristique et un ensemble de ressources de canal de commande différent correspond à un second paramètre caractéristique différent.

**14.** Équipement utilisateur selon la revendication 13, dans lequel la fonction récursive pour déterminer le point de départ de recherche dans le j$^{eme}$ ensemble de ressources de canal de commande est :

$$Y_{k,\,j} = (C'(j)\ Y_{k\text{-}1,\,j})\ \mathrm{mod}D,\, j = 0,\ 1,\ldots,\ K(c)\ \text{-}1$$

où k(c) est le nombre total d'ensembles de ressources de canal de commande, C'(j) est le second paramètre caractéristique.

**15.** Équipement utilisateur selon la revendication 13, dans lequel, dans différents types de canal de commande, l'ensemble de ressources de canal de commande qui comprend l'espace de recherche de canal de commande, est déterminé de différentes manières.

**16.** Équipement utilisateur selon la revendication 13, dans lequel, dans différents types de canal de commande, le nombre de candidats canaux de commande de l'espace de recherche de canal de commande dans chaque ensemble de ressources de canal de commande est déterminé de différentes manières.

**17.** Équipement utilisateur selon l'une quelconque des revendications 15 à 16, dans lequel différents types de canal de commande peuvent être attribués à l'un quelconque des groupes suivants :

des canaux de commande d'une sous-trame normale et des canaux de commande d'une sous-trame de réseau monofréquence de service de diffusion/multidiffusion multimédia ; des canaux de commande ordonnés de manière semi-statique et des canaux de commande ordonnés de manière dynamique ; des canaux de commande détectés dans un espace de recherche commun et des canaux de commande détectés dans un espace de recherche spécifique à un équipement utilisateur, spécifique à un UE ; des canaux de commande d'une signalisation d'ordonnancement de liaison montante et des canaux de commande d'une signalisation d'ordonnancement de liaison descendante ; des canaux de commande d'une transmission centralisée et des canaux de commande d'une transmission discrète ; des canaux de commande de différentes informations de commande de liaison descendante, DCI ; des canaux de commande de sous-trames de différents préfixes cycliques ; des canaux de commande de différents types de sous-trame spéciale ; des canaux de commande transmis dans des paires de blocs de ressources physiques, paires de blocs PRB, avec différents nombres d'éléments de ressource, RE, disponibles ; des canaux de commande transmis par des éléments de canal de commande qui comprennent différents nombres de groupes d'éléments de ressource ; et des canaux de commande de différentes porteuses.

18. Station de base, comprenant :

un module de détermination, configuré pour déterminer un espace de recherche de canal de commande en fonction d'un ensemble de ressources de canal de commande, dans laquelle l'ensemble de ressources de canal de commande comprend au moins un bloc de ressource physique ; et
un module de transmission, configuré pour faire correspondre un canal de commande amélioré à l'espace de recherche déterminé par le module de détermination et envoyer le canal de commande amélioré ; dans laquelle le module de détermination comprend :

un sous-module de détermination d'ensemble, configuré pour déterminer un ensemble de ressources de canal de commande qui comprend l'espace de recherche de canal de commande ;
un sous-module de détermination de nombre, configuré pour déterminer le nombre de candidats canaux de commande de l'espace de recherche de canal de commande dans chaque ensemble de ressources de canal de commande ;
un sous-module de détermination de point de départ, configuré pour déterminer un point de départ de recherche des canaux de commande ; et
un sous-module de détermination d'espace, configuré pour déterminer un espace de recherche en fonction d'une relation entre le point de départ de recherche déterminé par le sous-module de détermination de point de départ, un niveau d'agrégation des canaux de commande et le nombre de candidats canaux de commande dans le niveau d'agrégation ;

dans laquelle le sous-module de détermination de point de départ comprend :

un sous-module de détermination de valeur initiale, configuré pour déterminer une valeur initiale de la fonction récursive pour générer le point de départ de recherche des canaux de commande ; et
un sous-module de calcul de point de départ, configuré pour déterminer le point de départ de recherche en fonction de la valeur initiale de la fonction récursive du point de départ de recherche et de la fonction récursive ;

**caractérisée en ce que** :

dans différents ensembles de ressources de canal de commande, les valeurs initiales des fonctions récursives pour générer le point de départ de recherche des canaux de commande sont les mêmes ; et
dans différents ensembles de ressources de canal de commande, la fonction récursive pour déterminer le point de départ de recherche est différente ;
dans laquelle la fonction récursive comprend un second paramètre caractéristique et un ensemble de ressources de canal de commande différent correspond à un second paramètre caractéristique différent.

19. Station de base selon la revendication 18, dans laquelle la fonction récursive pour déterminer le point de départ de recherche dans le $j^{eme}$ ensemble de ressources de canal de commande est :

$$Y_{k,j} = (C'(j)\, Y_{k-1,j})\, \mathrm{mod} D,\ j = 0, 1,\ldots, K(c) - 1$$

où k(c) est le nombre total d'ensembles de ressources de canal de commande, C'(j) est le second paramètre caractéristique.

**20.** Station de base selon la revendication 18, dans laquelle, dans différents types de canal de commande, l'ensemble de ressources de canal de commande qui comprend l'espace de recherche de canal de commande, est déterminé de différentes manières.

**21.** Station de base selon la revendication 18, dans laquelle, dans différents types de canal de commande, le nombre de candidats canaux de commande de l'espace de recherche de canal de commande dans chaque ensemble de ressources de canal de commande est déterminé de différentes manières.

**22.** Station de base selon l'une quelconque des revendications 20 à 21, dans laquelle différents types de canal de commande peuvent être attribués à l'un quelconque des groupes suivants :

des canaux de commande d'une sous-trame normale et des canaux de commande d'une sous-trame de réseau monofréquence de service de diffusion/multidiffusion multimédia ; des canaux de commande ordonnés de manière semi-statique et des canaux de commande ordonnés de manière dynamique ; des canaux de commande détectés dans un espace de recherche commun et des canaux de commande détectés dans un espace de recherche spécifique à un équipement utilisateur, spécifique à un UE ; des canaux de commande d'une signalisation d'ordonnancement de liaison montante et des canaux de commande d'une signalisation d'ordonnancement de liaison descendante ; des canaux de commande d'une transmission centralisée et des canaux de commande d'une transmission discrète ; des canaux de commande de différentes informations de commande de liaison descendante, DCI ; des canaux de commande de sous-trames de différents préfixes cycliques ; des canaux de commande de différents types de sous-trame spéciale ; des canaux de commande transmis dans des paires de blocs de ressources physiques, paires de blocs PRB, avec différents nombres d'éléments de ressource, RE, disponibles ; des canaux de commande transmis par des éléments de canal de commande qui comprennent différents nombres de groupes d'éléments de ressource ; et des canaux de commande de différentes porteuses.

PRB 1          PRB 4          PRB 7        PRB 10

Set 1

0 1 2 3 4 5 6 7 8 9 10 11 12 13 14 15

⬚ eCCE

PRB 2          PRB 5          PRB 8        PRB 11

set 2

0 1 2 3 4 5 6 7 8 9 10 11 12 13 14 15

▨ eCCE

PRB 3          PRB 6          PRB 9        PRB 12

set 3

0 1 2 3 4 5 6 7 8 9 10 11 12 13 14 15

▦ eCCE

FIG. 1

| A UE determines a control channel search interval according to a control channel resource set and/or a control channel type | 201 |

| Perform control channel detection in the search interval | 202 |

FIG. 2

Determine a control channel set that includes the control channel search interval

301

Determine the number of control channel candidates of the control channel search interval in each control channel set

302

Determine a search start point of control channels

303

Determine a search interval according to a relational expression between the search start point, an aggregation level of control channels, and the number of control channel candidates under the aggregation level

304

FIG. 3

FIG. 4a

subframe0       subframe1

set 0

set 1

set 0

set 1

▨ A set of centralized transmission

▨ A set of discrete transmission

FIG. 4b

subframe0       subframe1

set 0

set 1

set 0

set 1

▨ The number of candidates is M

▨ The number of candidates is N

FIG. 4c

⟶ f

Carrier CC 0

set 0     set 1     set 2     set 3

Carrier CC 1
Carrier CC 2
Carrier CC 3
Carrier CC 4

FIG. 5

CC0

CC1

CC2

CC3

□ set1

▦ set2

▨ set3

FIG. 6

| Determine an initial value of a recursive function for generating a search start point of control channels | 701 |

| Determine the search start point according to the initial value of the recursive function of the search start point and the recursive function | 702 |

FIG. 7

Determine an initial value of a search start point of each control channel resource set in a first subframe ⟋ 801

Obtain the search start point of control channels in a first control channel resource set by using a recursive function according to the search start point of control channels in a second control channel resource set ⟋ 802

FIG. 8

subframe 0 ··· subframe N subframe N+1

set 0      set 0  $Y_{N,\ 0}$  $Y_{N+1,\ 0}$  set 0

set 1      set 1     set 1

$Y_{N,\ 1}$     $Y_{N+1,\ 1}$

FIG. 9

subframe 0 ··· subframe N subframe N+1

set 0   set 1    set 0   set 1    set 0   set 1

$Y_{0,0}$   $Y_{0,1}$    $Y_{N,\ 0}$   $Y_{N,\ 1}$   $Y_{N+1,\ 0}$   $Y_{N+1,\ 1}$

FIG. 10

Determine control channel resource sets configured on a first carrier — 1101

Within an interval composed of all control channel resource sets on the first carrier, determine a search start point of control channels of the multiple second carriers — 1102

FIG. 11

Control channel candidates of UE 2
Control channel candidates of UE 3

0 1 2 3 4 5 6 7 8 9 10 11 12 13 14 15
Search interval of set 1

eCCE occupied by other users

Control channel candidates of UE 3

0 1 2 3 4 5 6 7 8 9 10 11 12 13 14 15
Search interval of set 2
Control channel candidates of UE 2

FIG. 12

EP 2 894 915 B1

A base station determines a control channel search interval according to a control channel resource set and/or a control channel type, where the control channel resource set includes at least one physical resource block
1301

Map an enhanced control channel to the search interval and sending the enhanced control channel
1302

FIG. 13

User equipment
141

Determining unit
1401

Detecting unit
1402

FIG. 14

39

Determining unit — 151

Set determining subunit — 1511

Number determining subunit — 1512

Start point determining subunit — 1513

Interval determining subunit — 1514

FIG. 15

Start point determining subunit — 161

First setting subunit — 1611

First calculating subunit — 1612

FIG. 16

Start point determining subunit ⌐171

First determining subunit ⌐ 1711

Second determining subunit ⌐ 1712

FIG. 17

Start point determining subunit ⌐ 181

Initial value determining subunit ⌐ 1811

Start point calculating subunit ⌐ 1812

FIG. 18

User equipment ⌐191

Processor ⌐ 1911

FIG. 19

FIG. 20

FIG. 21

```
┌─────────────────────────────────────────┐
│ Start point determining submodule   ⌐ 221 │
│  ┌─────────────────────────────────┐     │
│  │    First setting submodule      │ ⌐ 2211│
│  └─────────────────────────────────┘     │
│  ┌─────────────────────────────────┐     │
│  │   First calculating submodule   │ ⌐ 2212│
│  └─────────────────────────────────┘     │
└─────────────────────────────────────────┘
```

FIG. 22

```
┌─────────────────────────────────────────┐
│    Start point determining          ⌐ 231 │
│         submodule                         │
│  ┌─────────────────────────────┐          │
│  │    First determining        │  ⌐ 2311  │
│  │      submodule              │          │
│  └─────────────────────────────┘          │
│  ┌─────────────────────────────┐          │
│  │   Second determining        │  ⌐ 2312  │
│  │      submodule              │          │
│  └─────────────────────────────┘          │
└─────────────────────────────────────────┘
```

FIG. 23

```
┌─────────────────────────────────────────┐
│    Start point determining          ⌐ 241 │
│         submodule                         │
│  ┌─────────────────────────────┐          │
│  │  Initial value determining  │  ⌐ 2411  │
│  │       submodule             │          │
│  └─────────────────────────────┘          │
│  ┌─────────────────────────────┐          │
│  │   Start point calculating   │  ⌐ 2412  │
│  │       submodule             │          │
│  └─────────────────────────────┘          │
└─────────────────────────────────────────┘
```

FIG. 24

Base station — 251

Processor — 2511

Transceiver apparatus — 2512

FIG. 25

**EP 2 894 915 B1**

**REFERENCES CITED IN THE DESCRIPTION**

**Patent documents cited in the description**

- CN 102355340 A
- EP 2744261 A1
- EP 2093953 A2